(19) **Europäisches Patentamt**
**European Patent Office**
**Office européen des brevets**

(11) **EP 4 465 649 A1**

(12) **EUROPEAN PATENT APPLICATION**
published in accordance with Art. 153(4) EPC

(43) Date of publication:
20.11.2024 Bulletin 2024/47

(21) Application number: 23848241.8

(22) Date of filing: 27.12.2023

(51) International Patent Classification (IPC):
$H04N\ 23/68$ (2023.01)   $H04N\ 23/55$ (2023.01)
$H04N\ 23/54$ (2023.01)   $G03B\ 5/00$ (2021.01)
$G03B\ 17/12$ (2021.01)

(52) Cooperative Patent Classification (CPC):
H04N 23/55; G03B 5/00; G03B 17/12; H04N 23/00;
H04N 23/54; H04N 23/68

(86) International application number:
PCT/KR2023/021735

(87) International publication number:
WO 2024/181656 (06.09.2024 Gazette 2024/36)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 27.02.2023  KR 20230026225
20.04.2023  KR 20230052127

(71) Applicant: Samsung Electronics Co., Ltd.
Suwon-si, Gyeonggi-do 16677 (KR)

(72) Inventors:
• **CHOI, Songha**
Suwon-si, Gyeonggi-do 16677 (KR)
• **SONG, Wonseok**
Suwon-si, Gyeonggi-do 16677 (KR)
• **YANG, Kyungdon**
Suwon-si, Gyeonggi-do 16677 (KR)
• **YUN, Jaemu**
Suwon-si, Gyeonggi-do 16677 (KR)

(74) Representative: **Gulde & Partner**
**Patent- und Rechtsanwaltskanzlei mbB**
**Wallstraße 58/59**
**10179 Berlin (DE)**

(54) **ACTIVE LENS CONTROL DEVICE AND METHOD FOR IMPROVING CORRECTION ANGLE**

(57)    An operation method of a camera module (180) according to the disclosure includes an operation (S101) of determining whether an unused time exists in which an image sensor (20) is not exposed, based on information about an exposure section of the image sensor (20) connected to a lens (60) for capturing an object, an operation (S102) of determining a motion value with respect to the camera module (180) based on gyro data generated by a gyro sensor (10) in case that the unused time existence, an operation (S103) of determining a target movement control angle with respect to the lens (60) based on the motion value, an operation (S104) of determining a movement angle per unit time with respect to the lens (60) based on the target movement control angle, and an operation (S105) of performing an active optical image stabilization OIS centering control operation AOC with respect to the lens (60) based on the determined movement angle per unit time.

FIG. 2

EP 4 465 649 A1

**Description**

[Technical Field]

The disclosure relates to a lens control apparatus and method and, more specifically, to an active lens control apparatus and method for jitter improvement.

[Background Art]

An optical image stabilization (OIS) technology is a technology for correcting shaking of an input image by moving a lens of a camera. The OIS may have physical correction angle limitations so if an image is corrected based on a signal from a gyro sensor and movement continues in one direction and the lens position reaches a physical limit, control in that direction may no longer be possible.

Therefore, to solve the problem, there is an attempt to overcome the physical correction angle limitation by moving the OIS lens to the central axis to reserve the correction angle at a time point in which an image sensor does not read out the image.

However, the method described above may have the advantage of having the effect of expanding the correction angle of the physical OIS, but in a section where a long exposure is performed in a low-light environment, the method may have a difficulty in achieving the effect because the time to move to the center is reduced or completely absent.

Furthermore, the method described above may cause overshooting or oscillation at a target position after moving the lens if the movement is made in a large angle quickly when moving the lens to the center in the non-exposure section.

[Disclosure]

[Technical Problem]

The disclosure provides an apparatus and method for improving a correction effect by using a variable attenuator in a low-light long exposure section and adaptively controlling shaking and a correction angle when controlling a camera lens toward the central axis at a moment when exposure is not possible in order to increase a physical correction effect by expanding a camera image stabilization angle.

[Technical Solution]

An operation method of a camera module according to the disclosure may include an operation of determining whether an unused time exists in which an image sensor is not exposed, based on information about an exposure section of the image sensor connected to a lens for capturing a object, an operation of determining a motion value with respect to the camera module based on gyro data generated by a gyro sensor in case that unused time exists, an operation of determining a target movement control angle with respect to the lens based on the motion value, an operation of determining a movement angle per unit time with respect to the lens based on the target movement control angle, and an operation of performing an active optical image stabilization OIS centering AOC control operation with respect to the lens based on the movement angle.

The motion value may relate to any motion of the camera module.

The movement angle per unit time may correspond to a value acquired by dividing the target movement control angle by at least a portion of the unused time.

The motion value may be determined based on a motion level determined based on a sum of maximum values and a sum of minimum values of multiple pieces of gyro data input from the gyro sensor for a predetermined input period.

The motion level may include real numbers within a specific range corresponding to predetermined multiple motions.

The movement angle per unit time may be determined based on the motion level.

The operation of performing the AOC control operation may include an operation of determining a weight corresponding to the unused time.

An operation of determining, based on the weight, an AOC value corresponding to a movement amount of the lens to move the lens to the preconfigured center may be further included.

The operation of performing the AOC control operation may include an operation of determining, based on the motion value and the target movement control angle, a video digital image stabilization VDIS/electronic image stabilization EIS value and an operation of determining an AOC value corresponding to a movement amount of the lens to move the lens to the preconfigured center based on the VDIS/EIS value.

The target movement control angle may be determined based on a difference between a time point at which the unused time starts and a time point at which the unused time ends.

The target movement control angle may be determined based on the motion level and a difference between the time point at which the unused time starts and the time point at which the unused time ends.

An electronic apparatus including the camera module according to the disclosure may include a gyro sensor for generating gyro data based on the movement of the camera module, an image sensor connected to the lens for capturing an object and generating information on the exposure section, an optical image stabilization OIS controller electrically connected to the gyro sensor and the image sensor, and a processor electrically connected to the OIS controller. The OIS controller may be configured to determine whether an unused time exists in which the image sensor is not exposed, based on information about the exposure section S101, determine a motion value with respect to the camera module, based on the gyro data in case that unused time exists S102, determine a target movement control angle with respect to the lens, based on the motion value S103, determine a movement angle per unit time with respect to the lens, based on the target movement control angle , and perform an active optical image stabilization OIS centering AOC control operation with respect to the lens based on the movement angle S105.

The movement angle per unit time may correspond to a value acquired by dividing the target movement control angle by at least a portion of the unused time.

The processor may determine a motion level, based on a sum of maximum values and a sum of minimum values of multiple pieces of gyro data input from the gyro sensor for a predetermined input period. The motion value may be determined based on the motion level.

The motion level may include real numbers within a specific range corresponding to predetermined multiple motions.

The movement angle per unit time may be determined based on the motion level.

The OIS controller may determine a weight corresponding to the unused time.

The OIS controller may determine an AOC value for controlling the movement of the lens, based on the weight.

The OIS controller may determine, based on the motion value and the target movement control angle, a video digital image stabilization VDIS/electronic image stabilization EIS value and determine an AOC value corresponding to a movement amount of the lens to move the lens to the preconfigured center based on the VDIS/EIS value.

The target movement control angle may be determined based on a difference between a time point at which the unused time starts and a time point at which the unused time ends.

The target movement control angle may be determined based on the motion level and a difference between the time point at which the unused time starts and the time point at which the unused time ends.

[Advantageous Effects]

The electronic apparatus including a camera module and the operation method thereof according to the disclosure may improve a correction effect by using a variable attenuator in a low-light long exposure section and adaptively control shaking and a correction angle when controlling a camera lens toward the central axis at a moment when exposure is not possible in order to increase a physical correction effect by expanding a camera image stabilization angle.

[Description of Drawings]

FIG. 1 is a block diagram illustrating an electronic apparatus 101 in a network environment 100 according to various embodiments.

FIG. 2 is a block diagram illustrating a camera module 180 in an electronic apparatus 101 according to various embodiments.

FIG. 3 is a flowchart illustrating an operation of a camera module 180 in an electronic apparatus 101 according to various embodiments.

FIG. 4 is a concept view illustrating a lens shift OIS 401, and a sensor shift OIS 402in an electronic apparatus 101 according to various embodiments.

FIG. 5 is a concept view illustrating a correction effect according to a lens shift OIS 401, and sensor shift OIS 402operation of a camera module 180 in an electronic apparatus 101 of the disclosure according to various embodiments.

FIG. 6 is a concept view illustrating a VDIS/EIS algorithm executed by an application processor 40 in an electronic apparatus 101 according to various embodiments.

FIG. 7 is a concept view illustrating an operation of a gyro sensor 20, an OIS MCU 30, and an application processor 40 of a camera module 180 in an electronic apparatus 101 according to various embodiments.

FIG. 8 is a flowchart illustrating an operation of calculating a movement angle per step of a camera module 180 in an electronic apparatus 101 according to various embodiments.

FIG. 9 is a graph 900 depicting a movement angle of a lens 60 per step in case that a camera module 180 controls a centering step using a maximum control method in an electronic apparatus 101 according to various embodiments.

FIG. 10 is a graph depicting a movement angle of a lens 60 per step in case that a camera module 180 controls a centering step in an average control method in an electronic apparatus 101 according to various embodiments.

FIG. 11 shows two graphs depicting an overshooting degree according to each case of controlling a centering step using a maximum control method and an average control method by a camera module 180 in an electronic apparatus 101 according to various embodiments.

FIG. 12 is a flowchart illustrating an operation of determining a control angle per step by a camera module 180 in an electronic apparatus 101 according to various embodiments.

FIG. 13 is a graph depicting a movement trajectory of a lens 60 according to an AOC movement value MV(AC) to which a target movement control angle (OIS correction value MV(O)) of a camera module 180 and an adaptive centering step are applied in an electronic apparatus 101 according to various embodiments.

FIG. 14 is a concept view illustrating an AOC control operation of a gyro sensor 20, an OIS MCU 30, and an application processor 40 of a camera module 180 in an electronic apparatus 101 according to various embodiments.

FIG. 15 is a block diagram illustrating an OIS MCU 30 and a camera module 180 in an electronic apparatus 101 according to various embodiments.

FIG. 16 is a flowchart illustrating an operation of a camera module 180 in an electronic apparatus 101 according to various embodiments.

FIG. 17 is a concept view illustrating a variable attenuator processing operation of a camera module 180 in an electronic apparatus 101 according to various embodiments.

FIG. 18 is a concept view illustrating a variable attenuator coefficient table for a variable attenuator processing operation of a camera module 180 in an electronic apparatus 101 according to various embodiments.

FIG. 19 is a concept view illustrating a variable attenuator coefficient table for a variable attenuator processing operation of a camera module 180 in an electronic apparatus 101 according to various embodiments.

FIG. 20 is a concept view illustrating a movement trajectory of a lens 60 according to an operation of a variable attenuator 35 of a camera module 180 in an electronic apparatus 101 according to various embodiments.

FIG. 21 is a graph depicting a VDIS correction value MV(V) according to an OIS correction value MV(O) in a camera module 180 of an electronic apparatus 101 according to various embodiments.

FIG. 22 is a flowchart illustrating an operation in which an OIS MCU 30 determines a target control angle during an unused section to relatively reduce an AOC movement value MV(AC) in an electronic apparatus 101 according to various embodiments.

FIG. 23 is a graph explaining a zero-centering method 2301 and an over-centering method 2301 for determining an AOC movement value MV(AC) by an OIS MCU 30 in an electronic apparatus 101 according to various embodiments.

FIG. 24 is a graph explaining an operation of determining a target movement control angle in an unused time section in case that an OIS MCU 30 applies an over-centering method 2301 in an electronic apparatus 101 according to various embodiments.

FIG. 25 is a graph depicting a movement trajectory of a lens 60 according to an AOC movement value MV(AC) to which a centering step is applied and a target movement control angle (OIS correction value MV(O)) of a camera module 180 in an electronic apparatus 101 according to various embodiments.

[Mode for Invention]

The disclosure provides an improved lens control method which adds a lens centering effect in a low-light long exposure section and adaptively determines, depending on a motion, whether to control a center movement stably without shaking or actively control for a jitter improvement effect.

Micro-shaking and jitter improvement are complementary, so lens movement may be the biggest factor. To improve jitter, a lens may need to compensate for a movement at high speeds. However, the fast movement of the lens may cause overshooting, that is a phenomenon in which an excessive movement in the direction of the movement is caused by inertia after moving to a target point, and oscillation, which is a phenomenon in which the lens shows little +- movement around the target point until the lens reaches a stable state at the target point. Therefore, to prevent micro-shaking when the lens drives, the lens may need to be moved slowly. Thus, in order to balance micro-shaking and jitter improvement, adaptive control may be performed in a direction causing a greater gain, depending on a situation.

In the disclosure, the adaptive control is referred to as active OIS centering AOC.

Hereinafter, the operation principle of the disclosure will be described in detail with reference to the accompanying drawings. In describing the disclosure, a detailed description of related known functions or configurations will be omitted if it is determined that it obscures the disclosure in unnecessary detail. Further, terms to be described later are terms defined in consideration of their functions in the disclosure, but may differ depending on intentions of a user or an operator, or customs. Accordingly, they should be defined on the basis of the contents of the whole description of the disclosure.

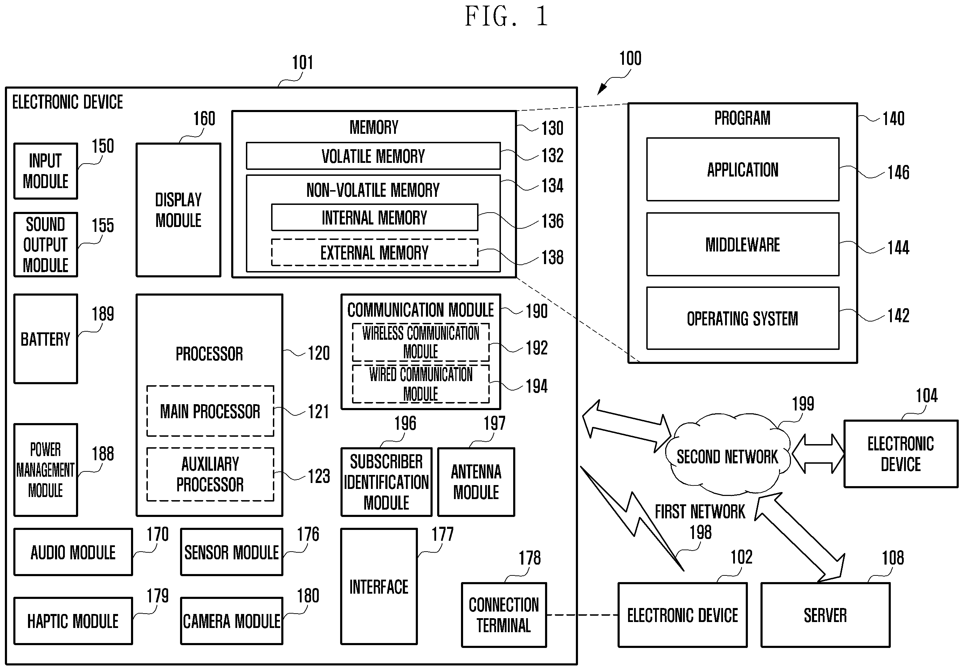

FIG. 1 is a block diagram illustrating an example electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one of the components (e.g., the connecting terminal 178) may be omitted from the electronic device 101, or one or more other components may be added in the electronic device 101. In various embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing or training. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure. In other words, the artificial intelligence model may be implemented in software or hardware.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include one or more of the group of, for example, a microphone, a mouse, a keyboard, a key (e.g., a button), and a digital pen (e.g., a stylus pen). That is, the input module 150 may be connected to said members of the group.

The sound output module 155 may output sound signals to the outside of the electronic device 101. The sound output module 155 may include, for example, a speaker or a receiver. The speaker may be used for general purposes, such as playing sound, for example, multimedia or playing recordings or for communication. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) and/or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) and/or wirelessly. According to an embodiment, the interface 177 may include, for example, a high definition multimedia interface (HDMI), a universal serial bus (USB) interface, a secure digital (SD) card interface, and an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel and/or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) and/or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and/or authenticate the electronic device 101 in a communication network, such as the first network 198 or the second network 199, using subscriber information (e.g., international mobile subscriber identity (IMSI)) stored in the subscriber identification module 196.

The wireless communication module 192 may support one or more of a 5G network, a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit and/or receive a signal or power to or from the outside (e.g., the external electronic device) of the electronic device 101. According to an embodiment, the antenna module 197 may include an antenna including a radiating element including a conductive material and/or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting and/or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of the operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology and/or IoT-related technology.

The electronic device according to various embodiments disclosed in the disclosure may be one of various types of devices. The electronic device may include, for example, a portable communication device (e.g., a smartphone), a computer device, a portable multimedia device, a portable medical device, a camera, a wearable device, or a home appliance. According to an embodiment of the disclosure, the electronic device is not limited to the devices described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

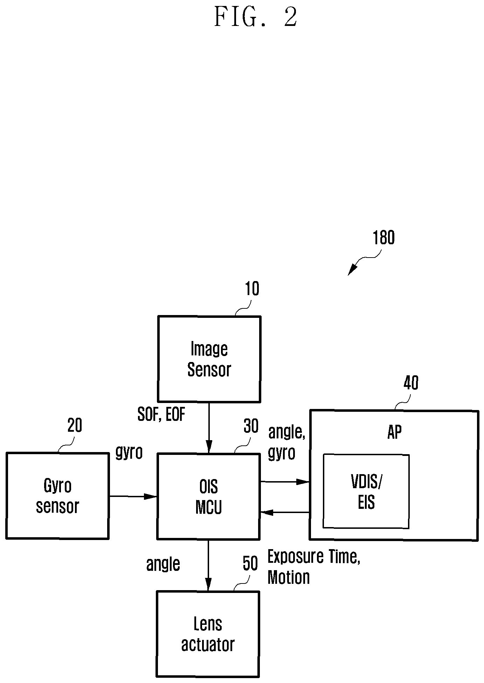

FIG. 2 is a block diagram illustrating a camera module 180 in an electronic apparatus 101 according to various embodiments.

Referring to FIG. 2, the camera module 180 may include an image sensor 10, a gyro sensor 20, an OIS micro controller unit MCU 30, an application processor (AP) 40, and a lens actuator 50.

The image sensor 10 may generate a start of frame SOF timing information and an end of frame EOF timing information with respect to a captured image. The image sensor 10 may input the SOF timing information and the EOF timing information to the OIS MCU 30. The OIS MCU 30 may receive the SOF timing information and the EOF timing information from the image sensor 10.

The gyro sensor 20 may generate gyro data based on a movement of the electronic apparatus 101 or the camera module 180. For example, the gyro data may include angular velocity information associated with the movement of the electronic apparatus 101 or the camera module 180. The gyro sensor 20 may input the gyro data to the OIS MCU 30. The OIS MCU 30 may receive the gyro data from the gyro sensor 20.

The OIS MCU 30 may generate data for controlling OIS based on the SOF timing information, the EOF timing information, and the gyro data. For example, the data for controlling the OIS may include information about an angle of movement for controlling the OIS. The OIS MCU 30 may input the gyro data and the data for controlling the OIS to the application processor 40.

The application processor 40 may receive the gyro data and the data for controlling OIS from the OIS MCU 30. The application processor 40 may process the gyro data and the data for controlling OIS by using a video digital image stabilization VDIS/electronic image stabilization EIS algorithm. For example, the application processor 40 may generate crop data for correcting shaking of an image being captured based on the gyro data and the data for controlling OIS by using the video digital image stabilization VDIS/electronic image stabilization EIS algorithm. Shaking may refer to a movement of the image sensor 10 due to external factors. For example, the crop data for correcting shaking of a captured image may include data indicating a range of a crop area for correcting within the image being captured. The application processor 40 may input the data for correcting shaking of an image being captured to the OIS MCU 30.

The OIS MCU 30 may receive the data for correcting shaking of an image from the application processor 40. The OIS MCU 30 may input the data for controlling the OIS and the data for correcting shaking of an image to the lens actuator 50.

The lens actuator 50 may receive the data for controlling the OIS and the data for correcting shaking of an image from the OIS MCU 30. The lens actuator 50 may control a center of a lens (not shown) based on the data for controlling the OIS and the data for correcting shaking of an image.

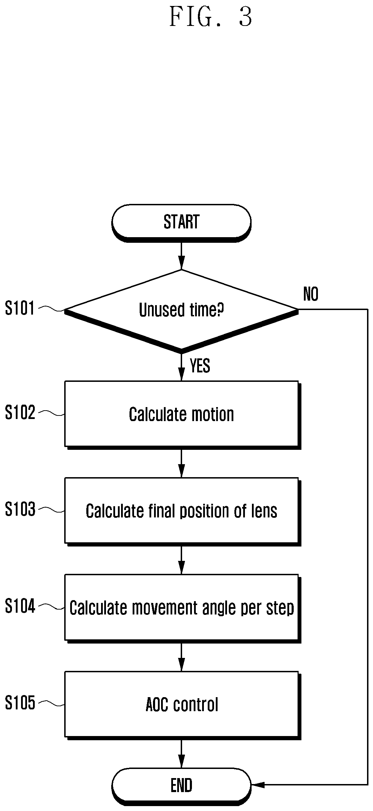

FIG. 3 is a flowchart illustrating an operation of a camera module 180 in an electronic apparatus 101 according to various embodiments.

Referring to FIG. 3, in operation S101, the OIS MCU 30 of the camera module 180 may determine whether an unused time is present or exist, i.e. a time when the image sensor 20 is not exposed. The unused time may be referred to as a non-exposure time or unexposed time or idle time. In other words, the unused time may refer to a time in which no operation of the image sensor 10 occurs. For example, the OIS MCU 30 may determine whether an unused time when the image sensor 20 is not exposed exists, based on data related to an exposure time of the image sensor 20 received from the application processor 40, and the SOF and EOF received from the image sensor 20.

For example, the camera module 180 may determine the unused time during which an AOC control operation may be performed based on an input processing time (frame per second (fps)) of an image being captured, an exposure time (exposure_time), and a readout time of the image sensor 20. For example, the unused time may correspond to a difference between a processing time (processing_time), and the exposure time (exposure_time) and the readout time of the image sensor 20 (i.e., Unused time = processing_time - exposure_time - readout).

Here, the unused time may mean a time from immediately after exposure of a last line of a (N-1)-th frame ends to just before exposure of a first line of a N-th frame begins when the image sensor 20 continuously outputs multiple frames.

For example, in case that the image sensor 20 uses a global shutter, such as a charge-coupled device (CCD) sensor, the image sensor 20 may read out in an instant, and thus the readout time may be 0. In this case, the unused time may correspond to a difference between the processing time (processing_time ) and the exposure time (exposure_time) (i.e., unused_time = processing_time - exposure_time).

When the unused time exceeds 0, the camera module 180 may perform an AOC operation control operation.

In the case of the unused time when the image sensor 20 is not used, the OIS MCU 30 may calculate a motion in operation S102. For example, the OIS MCU 30 may determine a motion of the camera module 180 based on the gyro data received from the gyro sensor 10.

In operation S103, the OIS MCU 30 may calculate a final position of the center of the lens (not shown). For example, the OIS MCU 30 may determine the final position of the center of the lens (not shown) based on data about a movement of the center of the lens (not shown) received from the application processor 40. Steps S104 and S105 of Fig. 3 will be addressed later.

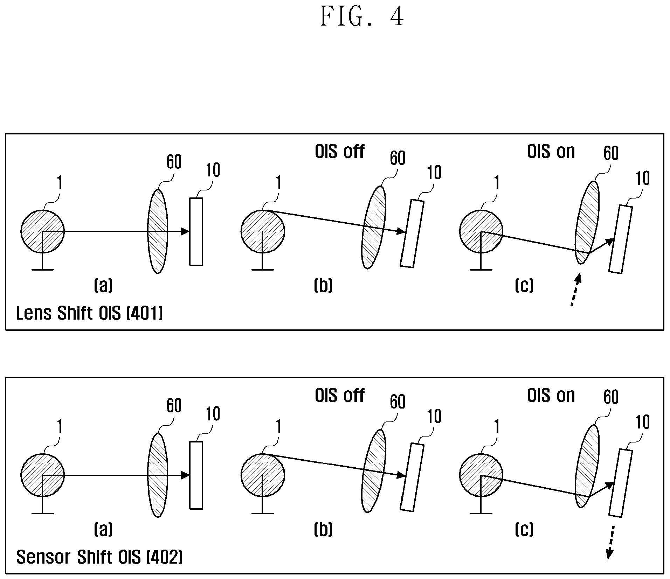

An operation of the camera module 180 for determining the final position of the center of the lens (not shown) will be described with reference to FIGS. 4 to 7.

FIG. 4 is a concept view illustrating a lens shift OIS 401, and a sensor shift OIS 402operation of a camera module 180 in an electronic apparatus 101 according to various embodiments.

Referring to FIG. 4, in the lens shift OIS 401 method, the camera module 180 may capture an object 1 through a lens 60 and the image sensor 20 (a). In case that an OIS function is off (OIS off) (b), the camera module 180 may not control a movement of the lens 60. The movement of the lens 60 depends on a movement of the camera module 180. For example, in case that the OIS function is off (OIS off), the center of the lens 60 does not correspond to the center of the object 1. Thus, blurring or shaking of the object 1 may occur in a captured image. In case that the OIS function is on (OIS on) (c), the camera module 180 may control a movement of the lens 60. The control may be in upward, downward, leftward, and rightward directions. The control may be based on gyro data received from the gyro sensor 10. For example, the camera module 180 may control the direction of the lens 60. In other words, the lens 60 is configured not to cause blurring or shaking of the object 1 in the captured image. For example, the camera module 180 may control the movement of the lens 60 in upward, downward, leftward, and rightward directions. In other words, the movement of the lens 60 is configured not to cause blurring or shaking of the object 1 in the captured image. This is achieved by taking the gyro data received from the gyro sensor 10 into account.

In the sensor shift OIS 402 method, the camera module 180 may capture the object 1 through the lens 60 and the image sensor 20 (a). In case that the OIS function is off (OIS off) (b), the camera module 180 may not control a movement of the lens 60. The movement of the lens 60 may depend on a movement of the camera module 180. In case that the OIS function is on (OIS on) (c), the camera module 180 may control the movement of the lens 20. The control may be in the upward, downward, leftward, and rightward directions. The control may depend on the movement of the camera module 180. For example, the camera module 180 may control the movement of the image sensor 10. The image sensor 10 may move in upward, downward, rightward, and leftward directions. In other words, the movement of the image sensor 10 is configured such that the object 1 is located at the center of the image, based on the gyro data received from the gyro sensor 20. The camera module 180 may control the shaking of the captured image, based on the gyro data received from the gyro sensor 20.

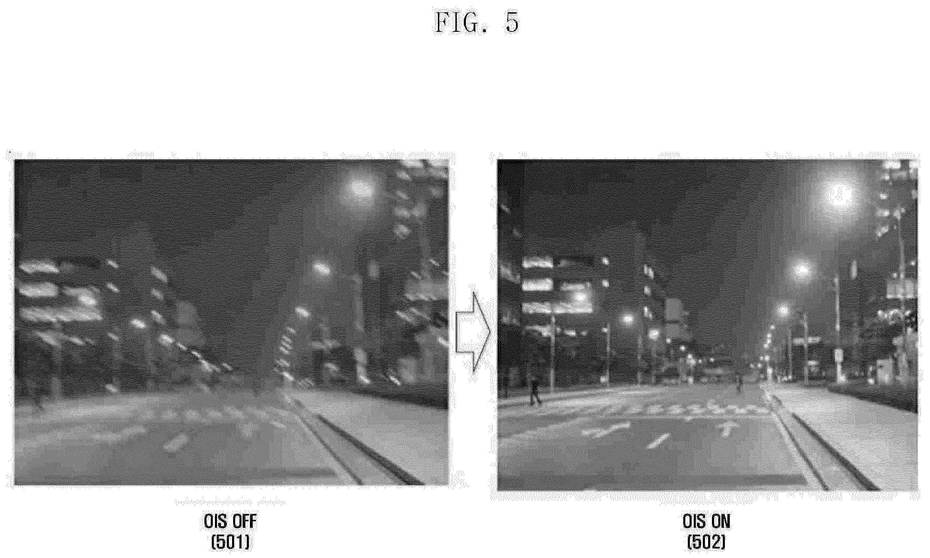

FIG. 5 is a concept view illustrating a correction effect according to a lens shift OIS 401, and sensor shift OIS 402 operation of a camera module 180 in an electronic apparatus 101 of the disclosure according to various embodiments.

Referring to FIG. 5, in case that the OIS function is off (OIS off) 501, the camera module 180 does not control angles of the lens 60, the image sensor 20, and the camera module 180 depending on the movement of the camera module 180 and thus may not correct the shaking of the captured image. In case that the OIS function is off (OIS off) 501, the camera module 180 may not remove the blurring of the captured image.

In case that the OIS function is on (OIS on) 502, the camera module 180 controls at least one of angles of the lens 60, the image sensor 10, and the camera module 180 depending on the movement of the camera module 180 and thus may correct the shaking of the captured image. In case that the OIS function is on (OIS on) 502, the camera module 180 may remove the blurring of the captured image.

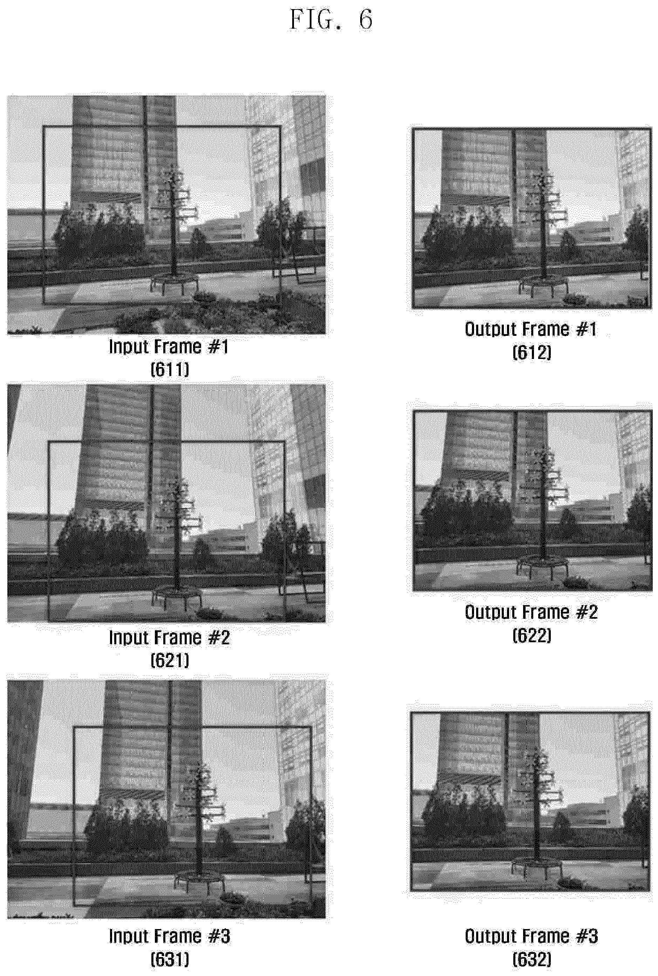

FIG. 6 is a concept view illustrating a VDIS/EIS algorithm executed by an application processor 40 in an electronic apparatus 101 according to various embodiments.

Referring to FIG. 6, the application processor 40 may remove a portion other than a center image from a first input frame (input frame #1) 611 and generate a first output frame (output frame #1) 612 by using the VDIS/EIS algorithm.

The application processor 40 may remove a portion other than an area to be cropped of from second input frame (input frame #2) 621 and generate a second output frame (output frame #2) 622 by using the VDIS/EIS algorithm.

The application processor 40 may remove a portion other than a center image from a third input frame (input frame #3) 631 and generate a third output frame (output frame #3) 632 by using the VDIS/EIS algorithm.

The application processor 40 may remove a portion of the captured image by using the VDIS/EIS algorithm so as to correct the shaking of the captured image. The application processor 40 may convert the shaking of the captured image into up, down, left, and right movement vectors by using the VDIS/EIS algorithm and remove a portion other than the center portion from the captured image so as to correct the shaking of the captured image.

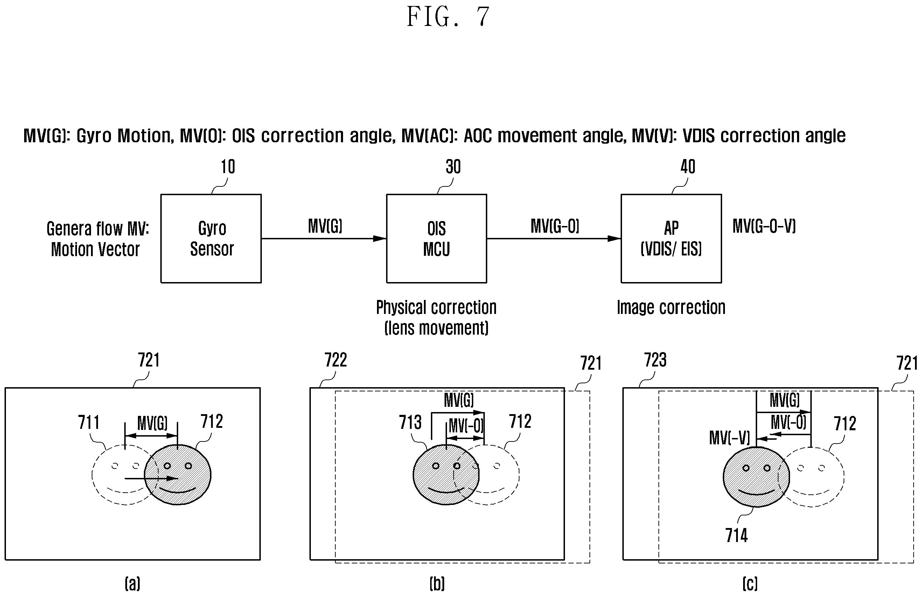

FIG. 7 is a concept view illustrating an operation of a gyro sensor 10, an OIS MCU 30, and an application processor 40 of a camera module 180 in an electronic apparatus 101 according to various embodiments.

Referring to FIG. 7, the OIS MCU 30 may receive the gyro data which is an amount of the movement of the camera module 180 corresponding to an overall amount of the movement required to be corrected, or a gyro motion vector value MV(G) from the gyro sensor 10. For example, the gyro motion vector value MV(G) may correspond to a difference between a position value of a first object 711 before a movement of the camera module 180 in a first screen 721 of an image being captured and a position value of a second object 712 after the movement of the camera module 180 (cf. (a)).

The OIS MCU 30 may determine an OIS correction value MV(O) based on the gyro motion vector value MV(G). The application processor 40 may control the movement of the lens 60. The control may be based on the gyro motion vector value MV(G) and/or the OIS correction value MV(O). The OIS MCU 30 may control the movement of the lens 60 based on a difference MV(G-0) between the gyro motion value MV(G) and the OIS correction value MV(O). For example, in the image captured according to the movement of the lens 60 based on the difference MV(G-0) between the gyro motion value MV(G) and the OIS correction value MV(O), the first screen 721 and the second object 712 may be replaced with a second screen 722 and a third object 713, respectively (cf. (b)).

The OIS MCU 30 may input the OIS correction value MV(O) to the application processor 40. The application processor 40 may receive the OIS correction value MV(O) from the OIS MCU 30. The application processor 40 may determine a VDIS correction value MV(V) based on the OIS correction value MV(O).

The application processor 40 may determine a crop area in the first screen 721 through the VDIS/EIS algorithm based on the VDIS correction value MV(V). The application processor 40 may correct the first screen 721 based on the gyro motion value MV(G), the OIS correction value MV(O), and the VDIS correction value MV(V). For example, in the image captured according to the correction based on the difference MV(G-0-V) between the gyro motion value MV(G) and the OIS correction value MV(O), the first screen 721 and the second object 712 may be replaced with a third screen 723 and a fourth object 714, respectively (cf. (c)).

Referring to FIG. 3 again, in operation S104, the camera module 180 may calculate a movement angle per step. The OIS MCU 10 may generate motion information based on the gyro data received from the gyro sensor 30. Alternatively, the application processor 40 may generate motion information based on the gyro data received from the gyro sensor 30 through the OIS MCU 10. For example, the motion information may include information about at least one of a slow walk, a fast walk, a slow run, and a fast run.

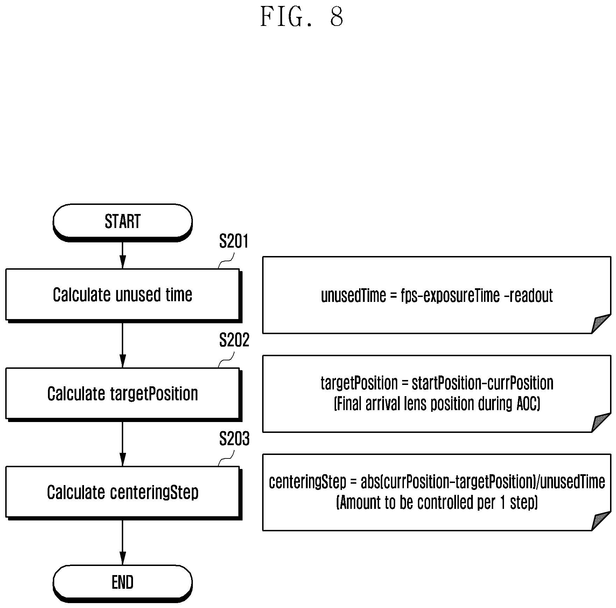

The operation of the camera module 180 for calculating the movement angle per step will be described with reference to FIGS. 8 to 11.

FIG. 8 is a flowchart illustrating an operation of calculating a movement angle per step of a camera module 180 in an electronic apparatus 101 according to various embodiments.

Referring to FIG. 8, in operation S201, the OIS MCU 30 may calculate the unused time. For example, the OIS MCU 30 may calculate the unused time as follows.

$$unusedTime = processing\_time - exposureTime - readout$$

The unused time may correspond to a time acquired by subtracting the exposure time (exposureTime) of the image sensor 10 and the readout time (readout) of the image sensor 10 from the processing time (processing_time) of the image sensor 10. The processing time may be given as a number of frames per second (fps).

In operation S202, the OIS MCU 30 may calculate a target movement control position (targetPosition). For example, the OIS MCU 30 may calculate the target movement control position (targetPosition) for the AOC control to be used in the unused time section as follows.

$$targetPosition = startPosition - currPosition$$

Here, the start position (startPosition) may indicate a position of the lens 60 before the camera module 180 moves. Here, the current position (currentPosition) may indicate a position of the lens 60 after the camera module 180 moves.

The movement of the lens 60 according to the control of the lens actuator 50 may be beyond the target movement control angle. This may be due to an over shooting phenomenon. The over shooting phenomenon may be at a time point where a control direction is swift due to inertia. An amount of movement according to the over shooting phenomenon may be proportional to a speed of the movement of the lens 60. There may be an error between the movement of the lens 60 according to the control of the lens actuator 50 and the movement according to the target movement control angle. The application processor 20 may determine the VDIS correction value MV(V) additionally considering the error. As the error is reduced, a calculation amount of the application processor 40 may be reduced.

In operation S203, the OIS MCU 30 may calculate a centering step (centeringStep). The centering step (centeringStep) may indicate a control angle per 1 step. Here, 1 step may indicate a preconfigured unit time. For example, 1 step may be 1 ms. For example, the OIS MCU 30 may determine the centering step by using the maximum control method and/or the average control method to reduce the error between the movement of the lens 60 according to control of the lens actuator 50 and the movement according to the target movement control angle. For example, the OIS MCU 30 may determine the centering step using the average control method as follows.

$$centeringStep = abs(currentPosition - targetPosition)/unusedTime$$

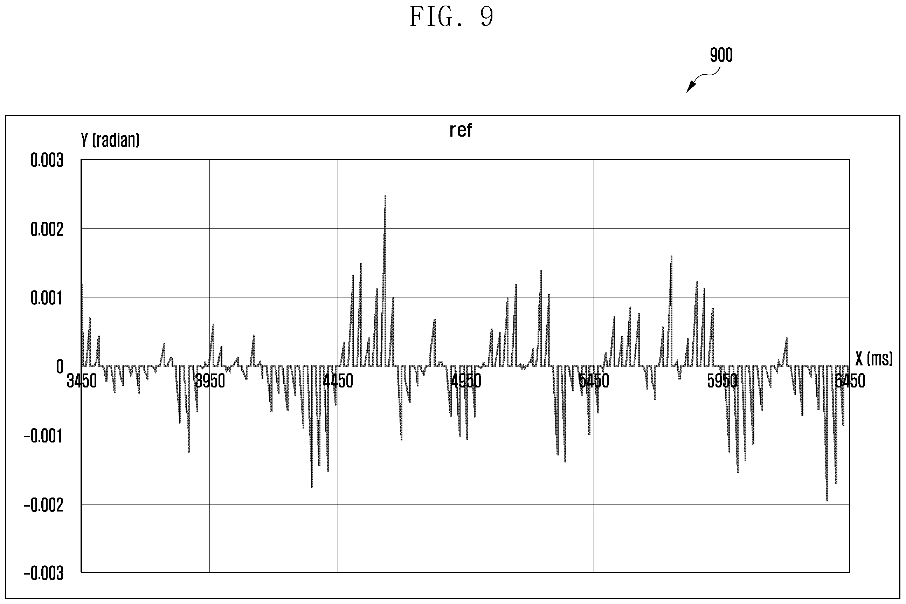

Effects according to the maximum control method and the average control method will be described with reference to FIGS. 9 to 11 below.

FIG. 9 is a graph 900 depicting a movement angle of a lens 60 per step in case that a camera module 180 controls a centering step using a maximum control method in an electronic apparatus 101 according to various embodiments.

Referring to FIG. 9, the OIS MCU 30 may determine the centering step using the maximum control method. For example, in a state in which the target control movement angle is 0.3 and the unused time is 10 ms, the OIS MCU 30 may configure the maximum control angle as 0.05. Every step may take 1ms. The OIS MCU 30 may move the lens 60 0.3 degrees, which is the target control movement angle, by moving 0.05 degrees at every step for 6 ms (i.e. 0,3/0,05 1ms steps). The OIS MCU 30 may end the movement of the lens 60 at a time point of 6 ms and stop the lens 60 for the remaining 4 ms.

In case that the movement of the lens 60 is controlled by determining the centering step using the maximum control method, the lens 60 may quickly return to the preconfigured center, but may tremble slightly after returning to the center.

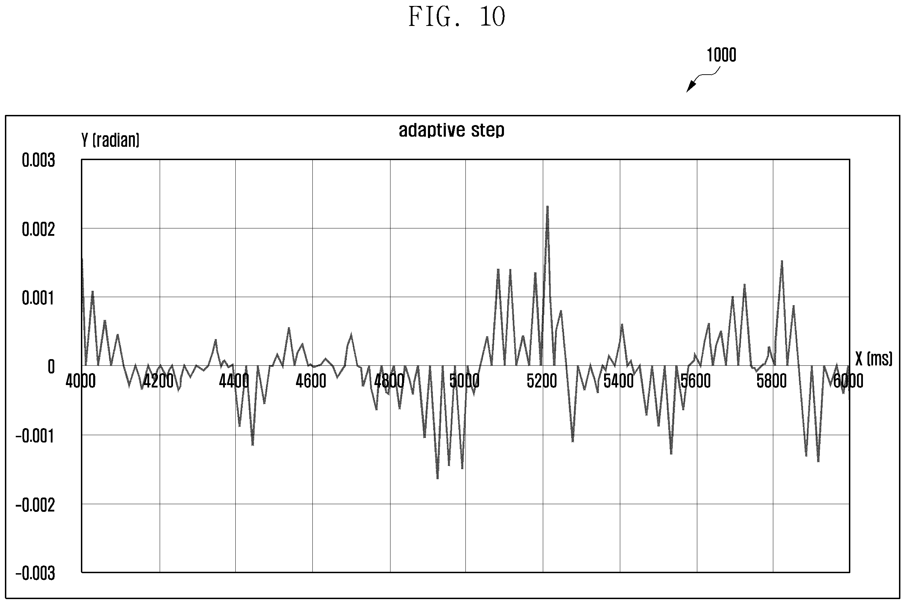

FIG. 10 is a graph depicting a movement angle of a lens 60 per step in case that a camera module 180 controls a centering step in an average control method in an electronic apparatus 101 according to various embodiments.

Referring to FIG. 10, the OIS MCU 30 may determine the centering step using the average control method. For example, in a state in which the target control movement angle is 0.3 and the unused time is 10 ms, the OIS MCU 30 may configure the maximum control angle as 0.05. Every step may take 1ms. The OIS MCU 30 may move the lens 60 0.3 degrees, which is the target control movement angle, by moving 0.03 (=0.3/10) degrees at every step for the full time, 10 ms. In this example, 10 steps are performed.

In case that the movement of the lens 60 is controlled by determining the centering step using the average control method, the lens 60 may return to the preconfigured center more slowly than the maximum control method, but may tremble less than the maximum control method after returning to the center.

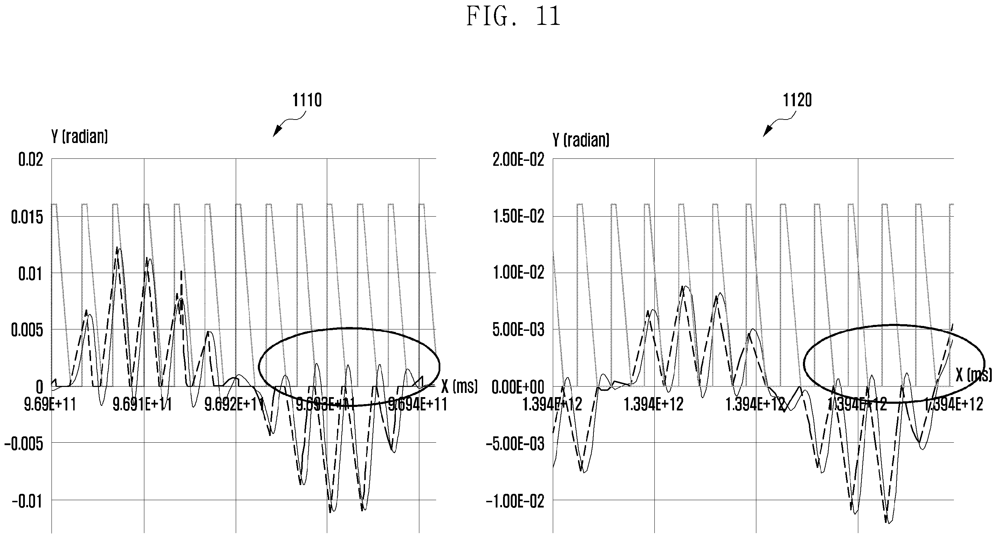

FIG. 11 shows two graphs depicting an overshooting degree according to each case of controlling a centering step using a maximum control method and an average control method by a camera module 180 in an electronic apparatus 101 according to various embodiments.

Referring to graph 1110 of an overshooting degree of the case of controlling the centering step using the maximum control method and graph 1120 of an overshooting degree of the case of controlling the centering step using the average control method in FIG. 11, in graph 1110 and graph 1120, a dashed line may indicate a target control movement angle with respect to the lens 60, and a solid line may indicate an actually moved angle of the lens 60. For example, the maximum control method may quickly move the lens 60. Due to the fast movement of the lens 60, overshooting may occur more, compared to the average control method. The average control method may move the lens 60 slower than the maximum control method. Due to the slow moving speed of the lens 60, the occurrence of overshooting may be reduced compared to the maximum control method. The average control method may reduce the occurrence of overshooting and thus reduce an error between the movement of the lens 60 according to control of the lens actuator 50 and the movement according to the target movement control angle.

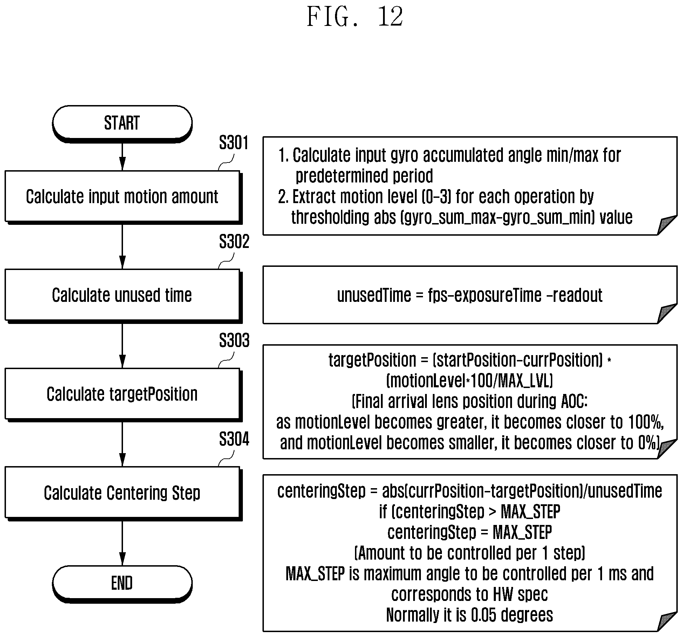

FIG. 12 is a flowchart illustrating an operation of determining a control angle per step by a camera module 180 in an electronic apparatus 101 according to various embodiments.

Referring to FIG. 12, in operation S301, the OIS MCU 30 may perform a calculation with respect to an input motion amount. For example, the OIS MCU 30 may determine accumulated maximum values (gyro_sum_max) and accumulated minimum values (gyro_sum_min). Said values may be accumulated with respect to gyro motion values MV(G) input from the gyro sensor 10 for a predetermined period of time. The OIS MCU 30 may determine an abs(gyro_sum_max - gyro_sum_min) value based on the accumulated maximum values and the accumulated minimum values. The OIS MCU 30 may determine a thresholded stepwise motion level based on the abs(gyro_sum_max - gyro_sum_min) value. For example, the thresholded stepwise motion level may include level 1 to level 3.

In operation S302, the OIS MCU 30 may calculate the unused time. For example, the unused time may be expressed as follows.

$$\text{unusedTime} = \text{processing\_time} - \text{exposureTime} - \text{readout}$$

The unused time may correspond to a time acquired by subtracting the exposure time (exposureTime) of the image sensor 10 and the readout time (readout) of the image sensor 20 from the processing time (processing_time) of the image sensor 10.

In operation S303, the OIS MCU 30 may calculate a target movement control position (targetPosition). For example, the OIS MCU 30 may determine the target movement control angle (targetPosition) for the AOC control to be used in the unused time section as follows.

$$\text{targetPosition[axis]} = (\text{startAngle[axis]} - \text{currentAngle[axis]})*a/2$$

Here, the start angle (startAngle) may indicate an angle of the lens 60 before the camera module 180 moves. That is, the start angle may indicate an angle of the lens 60 before an unused time section. Here, a current angle (currentAngle) may indicate an angle of the lens 60 after the camera module 180 moves. Here, "a" may correspond to a weight with respect to the motion value determined by the application processor 40. For example, the weight may be referred to as a centering level. For example, a centering level of a motion value with respect to slow walk may be 0. For example, a centering level of a motion value with respect to fast run may be 1.

In operation S304, the OIS MCU 30 may calculate a centering step (centeringStep). The centering step (centeringStep) may indicate a control angle per 1 step (1 ms). The OIS MCU 30 may determine the centering step as follows.

centeringStep[axis] = abs(currentPosition[axis] - targetPosition[axis])/unusedTime

In case that it is possible to stably control the lens actuator 50 to reduce overshooting, the OIS MCU 30 may increase an AOC movement value MV(AC) to be input to the lens actuator 50. Thereby, a physical correction performance with respect to an image being captured is maximized. The OIS MCU 30 may adaptively control the centering step to improve the physical correction performance with respect to an image being captured. The OIS MCU 30 may determine an adaptive centering step (adaptiveCenteringStep) as follows.

$$adaptiveCenteringStep = ACTIVE\_CENTERING\_STEP*b$$

$$(1 \le b \le 2,\ b = a+1,\ ACTIVE\_CENTERING\_STEP = 0.05\ degree)$$

Here, "a" may correspond to a weight with respect to the motion value determined by the application processor 40. For example, the weight may be referred to as a centering level. For example, a centering level of a motion value with respect to slow walk may be 0. For example, a centering level of a motion value with respect to fast run may be 1. In this case, "a" may be a real number between 0 and 1. Here, "b" may be a+1. A basically configured centering step (ACTIVE_CENTERING_STEP) may be 0.05 degrees.

The centering step (centeringStep) may not exceed the adaptive centering step (adaptiveCenteringStep). In case that the calculated centering step exceeds the adaptive centering step, the centering step may be determined as a preconfigured adaptive centering step.

Operation S301 to operation S304 may be expressed using pseudo codes as follows.

```
if (targetPosition[axis] == 0)
targetPosition[axis] = (startAngle[axis] - currentAngle[axis])*a/2;
centering Step = (abs(currentAngle[axis] - targetPosition[axis])) /
unusedTime;
adaptiveCenteringStep = ACTIVE_CENTERING_STEP * b;
if (centering Step > adaptiveCenteringStep)
centering Step = adaptiveCenteringStep;
```

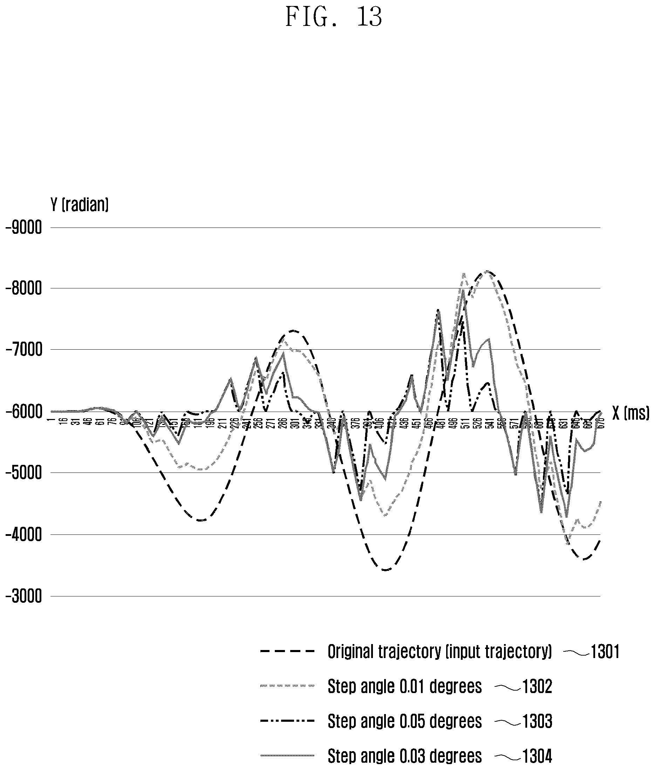

A movement trajectory of the lens 60 according to the AOC movement value MV(AC) to which the target movement control angle (OIS correction value MV(O)) and the adaptive centering step are applied may be as shown in FIG. 13.

FIG. 13 is a graph depicting a movement trajectory of a lens 60 according to an AOC movement value MV(AC) to which a target movement control angle (OIS correction value MV(O)) of a camera module 180 and an adaptive centering step are applied in an electronic apparatus 101 according to various embodiments.

Referring to FIG. 13, a first graph 1301 depicts an original trajectory of the lens 60 in case that the target movement control angle (the OIS correction value MV(O)) is applied in the camera module 180. A second graph 1302 depicts a trajectory of the lens 60 to which the centering step of 0.01 degrees is applied in the camera module 180. A third graph 1303 depicts a trajectory of the lens 60 to which the centering step of 0.05 degrees is applied in the camera module 180. A fourth graph 1304 depicts a trajectory of the lens 60 to which the centering step of 0.03 degrees is applied in the camera module 180.

Referring to FIG. 13, in case that the adaptive centering step, which is a control angle per unit of the target movement control angle (OIS correction value MV(O)) is applied, an actual movement of the lens 60 may be identified. Furthermore, it may be identified that, as a size of the angle of the centering step increases, the probability that the lens 60 is located at the center increases.

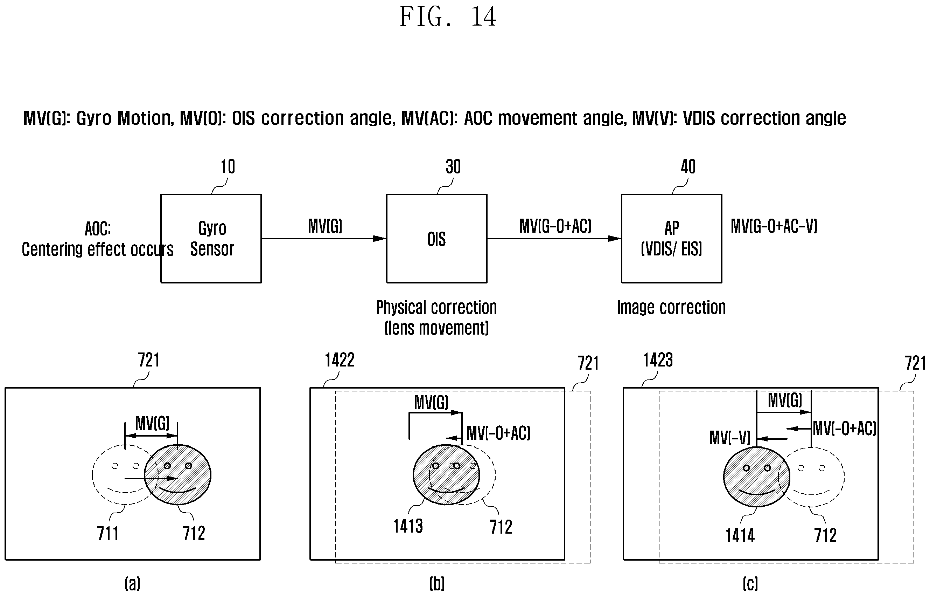

Referring to FIG. 3 again, in operation S105, the camera module 180 may perform the AOC control operation. The camera module 180 may perform the AOC control operation which determines the AOC movement value MV(AC). A method of the camera module 180 for determining the AOC movement value MV(AC) will be described with reference to FIGS. 14 to 25.

FIG. 14 is a concept view illustrating an AOC control operation of a gyro sensor 20, an OIS MCU 30, and an application processor 40 of a camera module 180 in an electronic apparatus 101 according to various embodiments.

Referring to FIG. 14, the OIS MCU 10 may determine the AOC movement value MV(AC) in addition to the operation described with reference to FIG. 7. For example, the OIS MCU 30 may determine the AOC movement value MV(AC) for moving the lens 60 to the center based on the gyro motion value MV(G). Operation (a) of FIG. 14 may be identical or similar to operation (a) of FIG. 7.

The OIS MCU 30 may control the movement of the lens 60 based on the gyro motion value MV(G), the OIS correction value MV(O), and/or the AOC movement value MV(AC). In the image captured according to the movement of the lens 60 based on the gyro motion value MV(G), the OIS correction value MV(O), and the AOC movement value MV(AC) (MV(G-0+AC)), the first screen 721 and the second object 712 may be replaced with a fourth screen 1422 and a fourth object 1413, respectively (cf. (b)).

The OIS MCU 10 may input the OIS correction value MV(O) and the AOC movement value MV(AC) to the application processor 20. The application processor 20 may receive the OIS correction value MV(O) and the AOC movement value MV(AC) from the OIS MCU 10. The application processor 20 may determine a VDIS correction value MV(V) based on the OIS correction value MV(O) and the AOC movement value MV(AC).

The application processor 20 may determine a crop area in the first screen 721 through the VDIS/EIS algorithm based on the VDIS correction value MV(V).

The application processor 40 may correct the first screen 721 based on the gyro motion value MV(G), the OIS correction value MV(O), the AOC movement value MV(AC), and the VDIS correction value MV(V). For example, in the image captured according to the correction based on the gyro motion value MV(G), the OIS correction value MV(O), the AOC movement value MV(AC), and the VDIS correction value MV(V), the first screen 721 and the second object 712 may be replaced with a fifth screen 1423 and a fifth object 1414, respectively (cf. (c)).

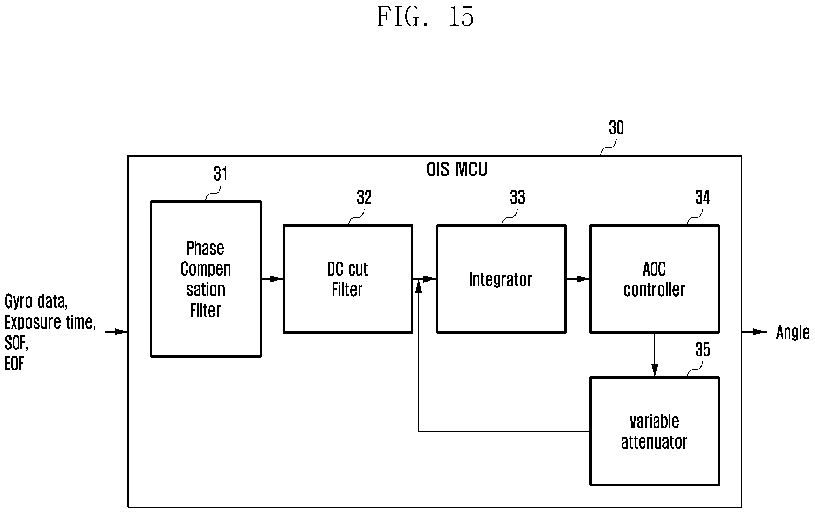

In case that an image is captured in a low-light environment, the camera module 180 may improve blurring of the image through the AOC control operation. The camera module 180 may determine the AOC movement value MV(AC) by using the variable attenuator 35. The OIS MCU 30 including the variable attenuator 35 will be described with reference to FIG. 15.

FIG. 15 is a block diagram illustrating an OIS MCU 30 and a camera module 180 in an electronic apparatus 101 according to various embodiments.

Referring to FIG. 15, the OIS MCU 30 may include a phase compensation filter 31, a DC cut filter 32, an integrator 33, an AOC controller 34, and/or the variable attenuator 35.

The phase compensation filter 31 may receive SOF data and EOF data from the image sensor 20. The phase compensation filter 31 may receive gyro data from the gyro sensor 10. The phase compensation filter 31 may receive data about an exposure time of the lens 60 from the application processor 40. The phase compensation filter 31 may process the SOF data, the EOF data, the gyro data, and/or the data about the exposure time of the lens 60. For example, the phase compensation filter 31 may compensate a phase delay in the lens actuator 50 to process the SOF data, the EOF data, the gyro data, and/or the data about the exposure time of the lens 60.

The phase compensation filter 31 may input the SOF data, the EOF data, the gyro data, and/or the data about the exposure time of the lens, of which phase has been compensated, to the DC cut filter 32.

The DC cut filter 32 may receive the SOF data, the EOF data, the gyro data, and/or the data about the exposure time of the lens 60 processed by the phase compensation filter 31 from the phase compensation filter 31. The DC cut filter 32 may repeatedly calculate a DC offset signal with respect to the SOF data, the EOF data, the gyro data, and/or the data about the exposure time of the lens 60 processed by the phase compensation filter 31 to remove a DC offset element from the SOF data, the EOF data, the gyro data, and/or the data about the exposure time of the lens 60. The DC cut filter 32 may input the SOF data, the EOF data, the gyro data, and/or the data about the exposure time of the lens 60, from which the DC offset element has been removed, to the integrator 33.

The integrator 33 may receive the SOF data, the EOF data, the gyro data, and/or the data about the exposure time of the lens 60, from which the DC offset element has been removed, from the DC cut filter 32. The integrator 33 may accumulate the SOF data, the EOF data, the gyro data, and/or the data about the exposure time of the lens 60, from which the DC offset element has been removed, convert a movement amount of the camera device 101 into an angle to be converted to data about a movement of the center of the lens 60. The integrator 33 may input the SOF data, the EOF data, the gyro data, and/or the data about the exposure time of the lens 60, from which the DC offset element has been removed, and/or the data about the movement of the center of the lens 60 to the AOC controller 34.

The AOC controller 34 may receive the SOF data, the EOF data, the gyro data, and/or the data about the exposure time of the lens 60, from which the DC offset element has been removed, and/or the data about the movement of the center of the lens 60 from the integrator 33. The AOC controller 34 may correct the data about the movement of the center of the lens 60 based on the SOF data, the EOF data, the gyro data, and/or the data about the exposure time of the lens 60, from which the DC offset element has been removed. The AOC controller 34 may input, to the variable attenuator 35, the SOF data, the EOF data, the gyro data, and/or the data about the exposure time of the lens 60, from which the DC offset element has been removed, and/or the data about the movement of the center of the lens 60, which is corrected by the AOC controller 34.

The variable attenuator 35 may receive, from the AOC controller 34, the SOF data, the EOF data, the gyro data, and/or the data about the exposure time of the lens 60, from which the DC offset element has been removed, and/or the data about the movement of the center of the lens 60, which is corrected by the AOC controller 34. The variable attenuator 35 may determine an AOC movement value MV(AC) for moving the lens 60 to the center axis based on the SOF data, the EOF data, the gyro data, and/or the data about the exposure time of the lens 60, from which the DC offset element has been removed, and/or the data about the movement of the center of the lens 60, which is corrected by the AOC controller 34. The variable attenuator 35 may input, to the integrator 33, the SOF data, the EOF data, the gyro data, and/or the data about the exposure time of the lens 60, from which the DC offset element has been removed, and/or the data about the movement of the center of the lens 60, which is corrected by the AOC controller 34.

The integrator 33 may receive the SOF data, the EOF data, the gyro data, and/or the data about the exposure time of the lens 60, from which the DC offset element has been removed, and/or the data about the movement of the center of the lens 60, which is corrected by the AOC controller 34.

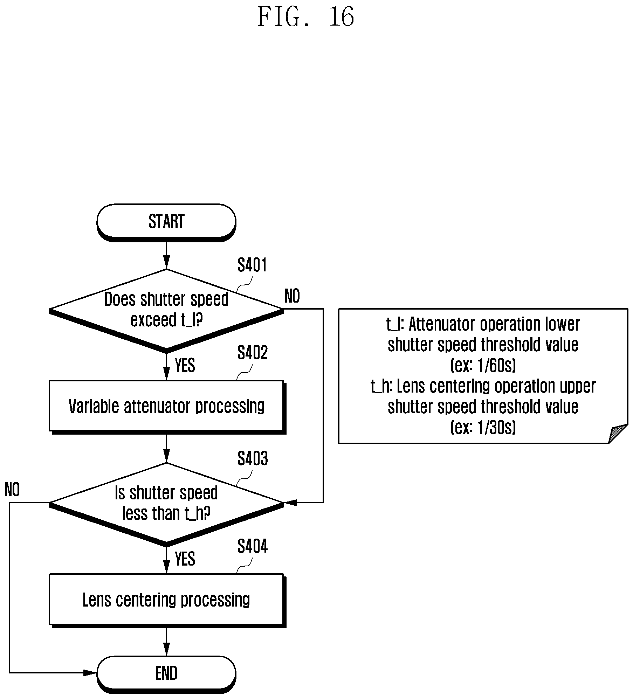

A flowchart of an operation of the camera module for determining the AOC movement value MV(AC) through the OIS MCU 30 including the variable attenuator 35 will be described with reference to FIG. 16.

FIG. 16 is a flowchart illustrating an operation of a camera module 180 in an electronic apparatus 101 according to various embodiments.

Referring to FIG. 16, in operation S401, the camera module 180 may determine whether a shutter speed exceeds t_1. That is, the camera module 180 may determine whether the shutter speed is slower than t_1. Here, t_1 may correspond to a threshold value for a variable attenuator processing operation. For example, t_1 may be 1/60s. The shutter speed may also be referred to as shutter time.

In case that the shutter speed exceeds t_1, the camera module 180 may proceed to operation S402 and perform a variable attenuator processing. That is, in case that the shutter speed is slower than t_1, the camera module 180 may perform the variable attenuator processing.

In case that the shutter speed is equal to or less than t_l, the camera module 180 may proceed to operation S403 and determine whether the shutter speed is less than t_h. That is, in case that the shutter speed is faster than or equal to t_1, the camera module 180 may determine whether the shutter speed is faster than t_h. Here, t_h may correspond to a threshold value for a lens centering processing operation. For example, t_h may be 1/30s. In other words, if the shutter time is long, the sensor 10 and the lens 60 are used for a longer time. Accordingly, the unused time is less or even zero.

In case that the shutter speed is less than t_h, the camera module 180 may proceed to operation S404 and perform a centering processing. That is, in case that the shutter speed is faster than t_h, the camera module 180 may perform the centering processing.

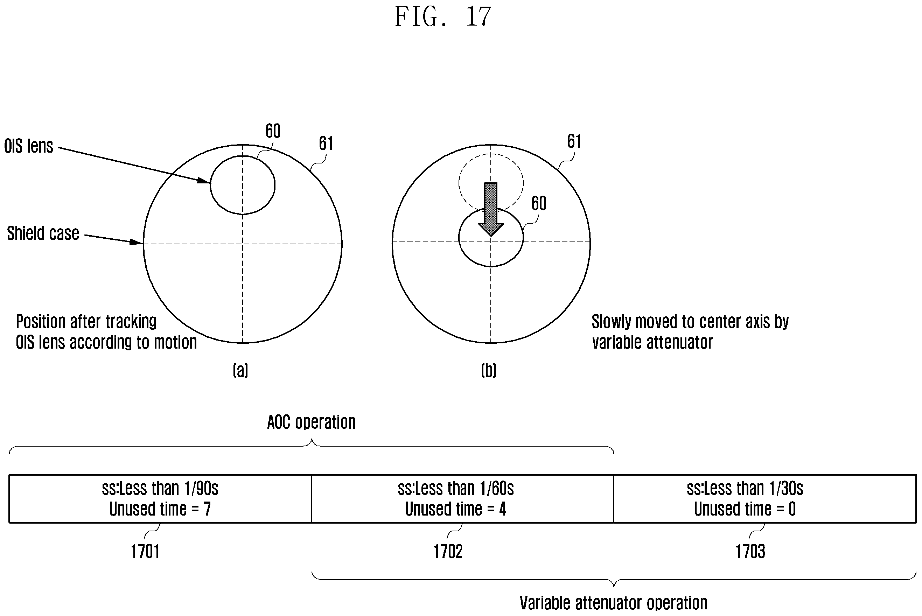

The operation of the camera module 180 for performing the variable attenuator processing operation will be described with reference to FIGS. 17 to 20.

FIG. 17 is a concept view illustrating a variable attenuator processing operation of a camera module 180 in an electronic apparatus 101 according to various embodiments.

Referring to FIG. 17, in case that the shutter speed is less than t_h (e.g., 1/30s) 1701 and 1702, the camera module 180 may perform an AOC operation. That is, in case that the shutter speed is faster than t_h, the camera module 180 may perform the AOC operation. For example, a time section in which the shutter speed is less than t_h may be referred to as an AOC section. The AOC section may indicate a time section in which the unused time exceeds 0.

In case that the shutter speed exceeds t_h (1/30s) 1703, the camera module 180 may not perform the AOC operation. For example, in case that the shutter speed is slower than t_h (1/30s), the camera module 180 may determine that there is no time for performing the AOC operation. In other words, in case that the shutter speed is slower than t_h (1/30s), the camera module 180 may determine that a time for performing the AOC operation is 0. A time section in which the shutter speed exceeds t_h may be referred to as a non-AOC section. The non-AOC section may indicate a time section in which the unused time is 0.

In case that the shutter speed is equal to or less than 1/60s and exceeds 1/90s 1701, the unused time may be equal to or greater than 7 ms. That is, the shutter speed is faster than 1/60s and slower 1/90s, there is a sufficient unused time and thus the AOC operation of the camera module 180 may be efficiently performed. In case that the shutter speed is equal to or lower that 1/30s and exceeds 1/60s, that is, the shutter speed is faster than 1/30s and slower than 1/60s, the efficiency of the AOC operation of the camera module 180 may be reduced. In case that the shutter speed exceeds 1/30s, that is, the shutter speed is slower than 1/30s, the unused time is 0 and thus the camera module 180 may not perform the AOC operation.

In the section 1702 in which the efficiency of the AOC operation is reduced and the section 1703 in which the AOC operation is not performed, the camera module 180 may perform the variable attenuator processing operation by using the variable attenuator 35. In the section 1702 in which the efficiency of the AOC operation is reduced and the section 1703 in which the AOC operation is not performed, the camera module 180 may perform the variable attenuator processing operation to increase the centering effect with respect to the lens 60.

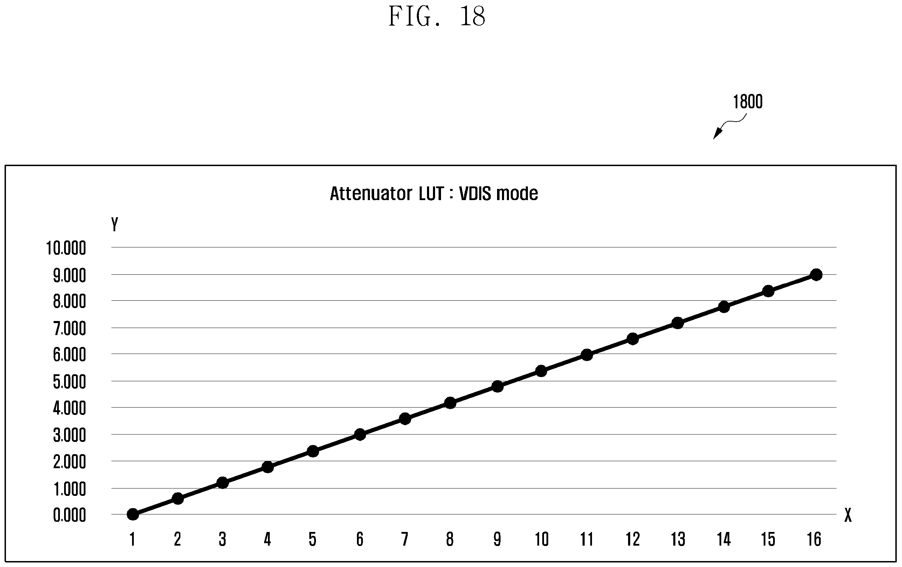

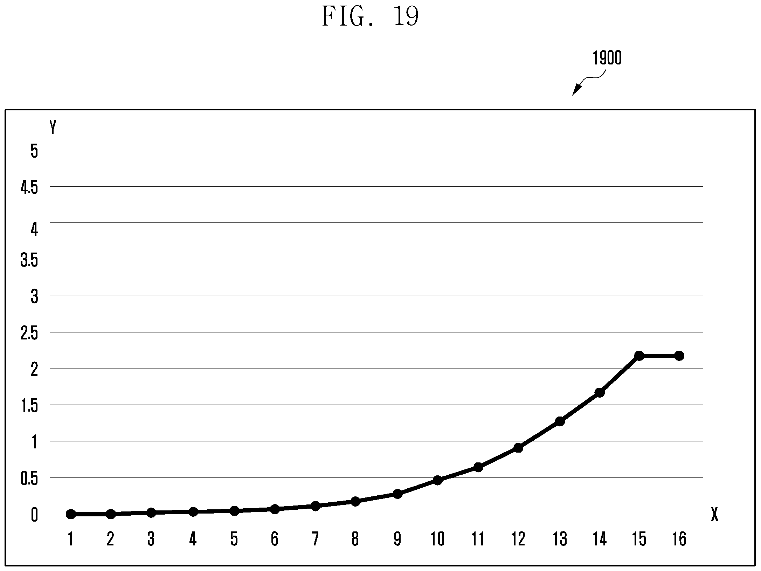

For example, the variable attenuator 35 may generate a variable attenuator coefficient table including 16 quantized index values (1 to 16). For example, the variable attenuator coefficient table may have a linear shape 1800 as shown in FIG. 18. Alternatively, the variable attenuator coefficient table may have a curved shape 1900 as shown in FIG. 19. The variable attenuator 35 may determine quantized index values through a pseudo code as follows.

```
lut_idx = angle* 16 /ANG_MAX // (0 <= lut_idx <= 16)
att_value = lut[lut_idx]
if (angle > 0)
angle -= att_value
else if (angle < 0)
angle += att_value
```

Here, "lut_idx" may correspond to the x axis of FIGS. 18 and 19. Here, "angle" may correspond to the y axis of FIGS. 18 and 19. For example, "lut_idx" may correspond to a quantized value of an angle input to the variable attenuator 35 into 16 steps. For example, "angle" may correspond to an output value corresponding to the quantized value in 16 steps.

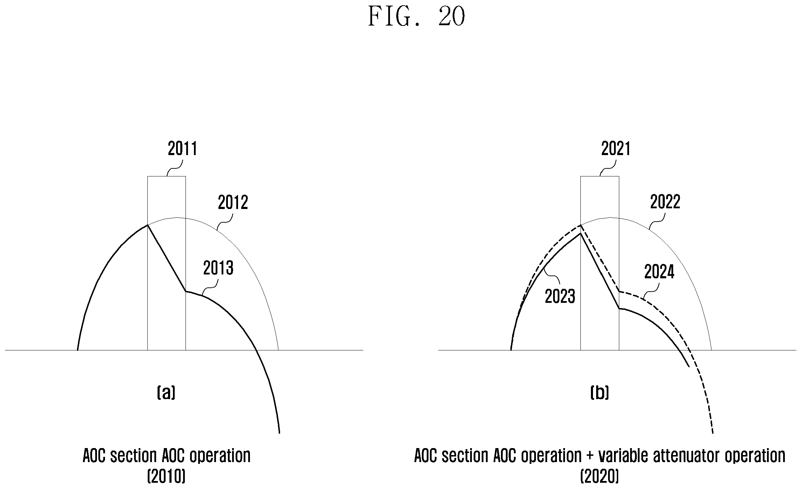

A movement trajectory of the lens 60 according to the AOC movement value MV(A) determined by reflecting the index value determined by the variable attenuator 35 will be described with reference to FIG. 20.

FIGS. 20A and 20B are concept views illustrating movement trajectories of a lens 60 according to an operation of a variable attenuator 35 of a camera module 180 in an electronic apparatus 101 according to various embodiments.

Referring to part (a) in FIG. 20, the lens 60 may move along a preconfigured trajectory 2012 in a used time section. When the lens 60 enters the unused time section 2011, the lens may have a movement 2013 to move to the center of the camera module 180 according to the AOC movement value MV(AC).

Referring to part (b) in FIG. 20, the lens 60 may move along a preconfigured trajectory 2022 in the used time section. When the lens 60 enters the unused time section 2021, the lens may have a movement 2023 to move to the center of the camera module 180 according to the AOC movement value MV(AC). In the unused time section 2021, the lens 60 may have a movement 2024 to move to the center of the camera module 180 according to the AOC movement value MV(AC) to which an index value determined by the variable attenuator 35 have been reflected.

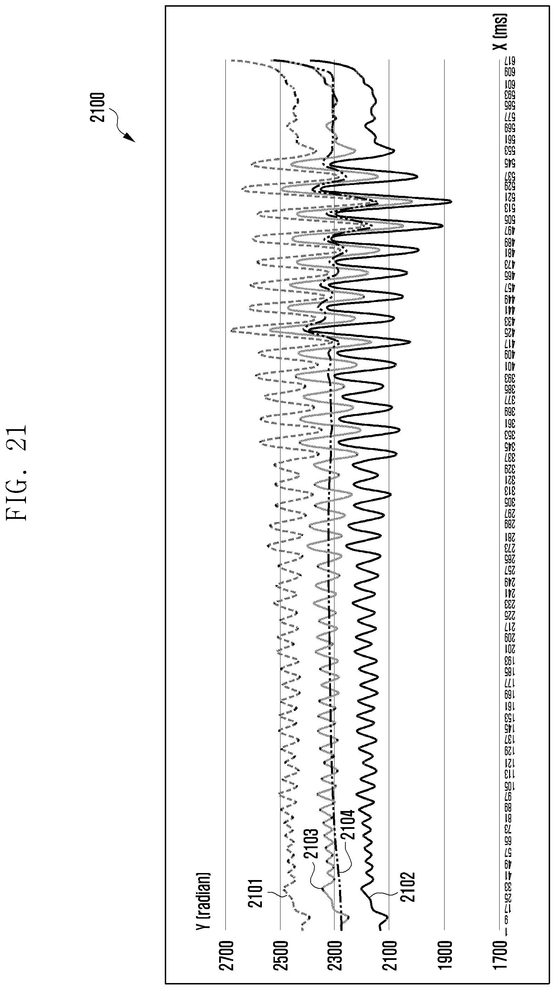

FIG. 21 is a graph depicting a VDIS correction value MV(V) according to an OIS correction value MV(O) in a camera module 180 of an electronic apparatus 101 according to various embodiments.

FIG. 21 shows a schematic graph of an upper threshold value 2101 of the VDIS correction value MV(V), a lower threshold value 2102 of the VDIS correction value MV(V), the gyro motion value MV(G) 2103, and the VDIS correction value MV(V) 2104.

In case that the AOC control operation is performed according to the OIS correction value MV(O), the application processor 40 may determine the VDIS correction value MV(V) based on the OIS correction value MV(O). For example, the VDIS correction value MV(V) may be expressed as follows.

$$MV(V) = MV(G) - MV(O) - MV(AC)$$

In case that the OIS correction value MV(O) increases, the VDIS correction value MV(V) may relatively decrease. For example, in case that the OIS MCU 30 increases the OIS correction value MV(O), the application processor 40 may reduce the VDIS correction value MV(V) relatively in consideration of a physical movement amount of the lens 60. In case that the OIS correction value MV(O) determined by the OIS MCU 30 approaches a predetermined threshold value, blur or jitter may occur in a captured image in the camera module 180.

For example, in case that the lens 60 moves to the center according to the OIS correction value MV(O) in the unused time in which the AOC control operation is performed, there may be a difference in images. The VDIS correction value MV(V) may have a loss equal to the difference.

When the AOC movement value MV(AC) increases, the VDIS correction value MV(V) may increase. In case that the OIS MCU 30 increases the AOC movement value MV(AC), the application processor 40 may determine the relatively increased VDIS correction value MV(V). In case that the VDIS correction value MV(V) 2104 determined by the application processor 40 approaches the upper threshold value 2102 or the lower threshold value 2103, the application processor 40 may not perform correction using the VDIS/EIS algorithm with respect to an image being captured.

The OIS MCU 10 may determine the AOC movement value MV(AC) based on the upper threshold value 2102 and the lower threshold value 2103 of the VDIS correction value MV(V). For example, the OIS MCU 30 may relatively reduce the AOC movement value MV(AC) based on the upper threshold value 2102 and the lower threshold value 2103 of the VDIS correction value MV(V) to prevent the VDIS correction value MV(V) 2104 determined by the application processor 40 from approaching the upper threshold value 2102 or the lower threshold value 2103. In case that the AOC movement value MV(AC) is relatively reduced and the VDIS correction value MV(V) 2104 does not approach the upper threshold value 2102 or the lower threshold value 2103, the application processor 40 may perform correction using the VDIS/EIS algorithm with respect to an image being captured.

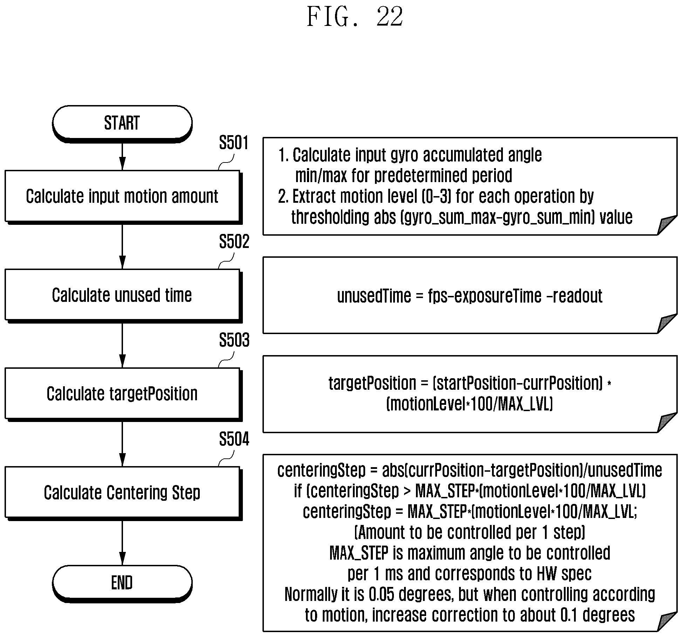

The operation of the OIS MCU 30 for relatively reducing the AOC movement value MV(AC) based on the upper threshold value 2102 and the lower threshold value 2103 of the VDIS correction value MV(V) will be described with reference to FIGS. 22 to 25.

FIG. 22 is a flowchart illustrating an operation in which an OIS MCU 30 determines a target control angle to be used during an unused section to relatively reduce an AOC movement value MV(AC) in an electronic apparatus 101 according to various embodiments.

Referring to FIG. 22, in operation S501, the OIS MCU 30 may perform a calculation with respect to an input motion amount. The OIS MCU 30 may determine a motion amount of the electronic apparatus 101 based on the gyro motion value MV(G). In case that a difference between a maximum accumulation gyro motion value MV(G) and a minimum accumulation gyro motion value exceeds a predetermined threshold value based on a maximum gyro motion value MV(G) (angle value) and a minimum gyro motion value accumulated for a predetermined period (e.g., 400 ms), the OIS MCU 30 may determine that the motion amount is greater than a predetermined amount. The OIS MCU 30 may determine a motion level by thresholding the motion amount into multiple steps.

For example, the OIS MCU 30 may determine accumulated maximum values (gyro_sum_max) and accumulated minimum values (gyro_sum_min) with respect to gyro motion values MV(G) input from the gyro sensor 10 for a predetermined period of time. For example, the OIS MCU 30 may determine an abs (gyro_sum_max - gyro_sum_min) value based on the accumulated maximum value and the accumulated minimum value. The OIS MCU 30 may determine a thresholded stepwise motion level based on the abs (gyro_sum_max - gyro_sum_min) value. For example, the thresholded stepwise motion level may include level 0 to level 3. For example, the OIS MCU 30 may determine a motion level of 3 or higher in case that an abs (gyro_sum_max - gyro_sum_min) value is about 2.5 degrees or greater. The OIS MCU 30 may determine a motion level of 2 in case that an abs (gyro_sum_max-gyro_sum_min) value is 1.5 degrees to 2.5 degrees. The OIS MCU 30 may determine a motion level of 1 in case that an abs (gyro_sum_max - gyro_sum_min) value is 0.5 degrees to 1.5 degrees. The OIS MCU 30 may determine a motion level of 0 in case that an abs (gyro_sum_max - gyro_sum_min) value is less than 0.5 degrees. Preferably, according to another example, the OIS MCU 30 may determine a motion level of 3 or higher in case that an abs (gyro_sum_max - gyro_sum_min) value is about 3.5 degrees or greater. The OIS MCU 30 may determine a motion level of 2 in case that an abs (gyro_sum_max-gyro_sum_min) value is 2.0 degrees to 3.5 degrees. The OIS MCU 30 may determine a motion level of 1 in case that an abs (gyro_sum_max - gyro_sum_min) value is 1.0 degrees to 2.0 degrees. The OIS MCU 30 may determine a motion level of 0 in case that an abs (gyro sum _max - gyro_sum_min) value is less than 1.0 degrees.

In operation S502, the OIS MCU 30 may calculate the unused time. For example, the unused time may be expressed as follows.

$$unusedTime = processing\_time - exposureTime - readout$$

The unused time may correspond to a time acquired by subtracting the exposure time (exposureTime) of the image sensor 10 and the readout time (readout) of the image sensor 20 from the processing time (processing_time) of the image sensor 10 with respect to a captured image. The processing time may be a reciprocal of a frame rate given in frames per second (fps).

In operation S503, the OIS MCU 30 may calculate a target movement control angle (targetPosition). The OIS MCU 30 may determine the AOC movement value MV(AC) to move the lens 60 in an opposite direction by an angle moved in the exposure section in the unused time section. In other words, if the lens 60 has moved in one direction in the exposure section, subsequently, the lens 60 may move in the opposite direction, that is, to where it came from, in the unused time section. The opposite direction may be the direction to the center. For example, the OIS MCU 30 may determine, based on a zero-centering method or an over-centering method, the AOC movement value MV(AC) to move the lens 60 in an opposite direction by an angle moved in the exposure section.

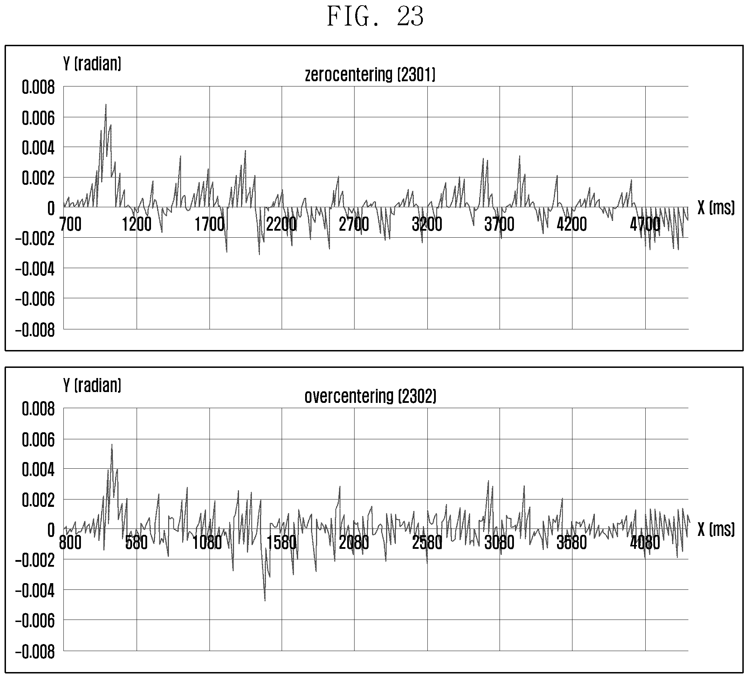

A movement trajectory and an effect of the lens 60 according to the zero-centering method and the over-centering method will be described with reference to FIG. 23.

FIG. 23 is a graph explaining a zero-centering method 2301 and an over-centering method 2302 for determining an AOC movement value MV(AC) by an OIS MCU 30 in an electronic apparatus 101 according to various embodiments.

Referring to FIG. 23, in each graph depicting the zero-centering method 2301 and the over-centering method 2302, an x-axis and a y-axis may represent time, and the OIS correction value MV(O), respectively. According to the zero-centering method 2301, a shaking phenomenon with respect to a captured image may be minimized but an increase effect of the VDIS correction value MV(V) may be reduced. According to the over-centering method 2302, the shaking phenomenon with respect to a captured image may occur but the VDIS correction value MV(V) may be increased. According to the over-centering method 2301, a jitter performance may be improved.

For example, the over-centering method 2302 may correspond to a method of further moving the lens 60 in a direction in which the lens 60 moves without stopping at the center when the lens 60 moves to the center (y=0). The zero-centering method 2301 may correspond to a method by which the lens 60 stops if the lens 60 is positioned at the center when the lens 60 moves to the center (y=0). A frequency at with which the lens 60 is located at the center (y=0) may be higher in the graph of the zero-centering method 2301 than in the graph of the over-centering method 2302. The graph of the over-centering method 2302 may have a lower frequency than a frequency with which the lens 60 is located at the center (y=0) than the graph of the zero-centering method 2301. In other words, the zero-centering method 2301 may remain at the center (y=0). Thereby, the lens 60 may be at the center (y=0) for a longer time. For the over-centering method 2302, the lens 60 will only temporarily be at the center (y=0).

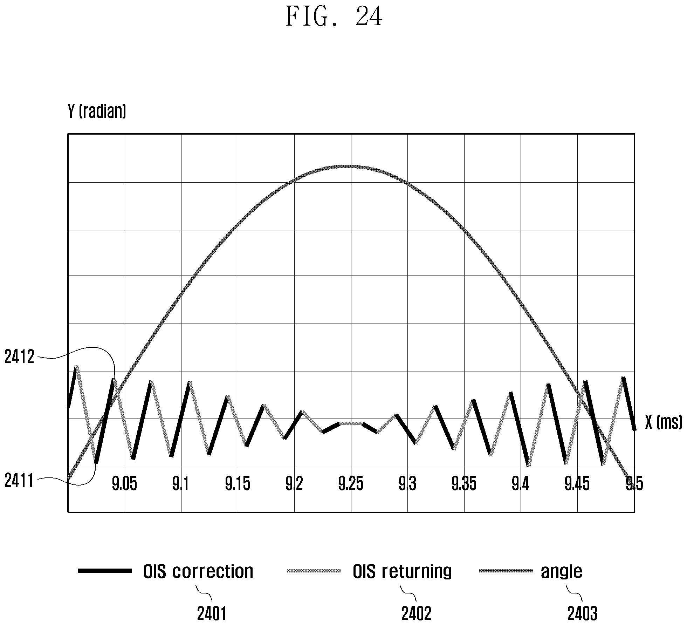

The OIS MCU 30 may combine and apply the zero-centering method 2301 and the over-centering method 2302. An operation of the OIS MCU 30 for combining and applying the zero-centering method 2301 and the over-centering method 2302 will be described with reference to FIG. 24.

FIG. 24 is a graph explaining an operation of determining a target movement control angle in an unused time section in case that an OIS MCU 30 applies an over-centering method 2301 in an electronic apparatus 101 according to various embodiments.

Referring to FIG. 24, a start angle may indicate an angle 2403 corresponding to a start point (e.g., 2411) of each OIS correction 2401 section. A current angle (currentAngle) may indicate an angle 2403 corresponding to a start point (e.g., 2412) of each OIS returning 2402 section.

In the case of applying the zero-centering method, the OIS MCU 30 may configure a target movement control angle in the unused time section as 0. In the case of applying the over-centering method 2301, the OIS MCU 30 may configure a target movement control angle (targetPosition) to be used in the unused time section as follows.

$$targetPosition = (startAngle - currentAngle)/2$$

In the case of combining and applying the zero-centering method 2301 and the over-centering method 2302, the OIS MCU 10 may configure a target movement control angle(targetPosition) in the unused time section as follows.

$$targetPosition = (startAngle - currentAngle)*a/2 \ (0 \leq a \leq 1)$$

Here, "a" may correspond to a weight with respect to the motion value determined by the application processor 40. For example, the weight may be referred to as a centering level. For example, a centering level of a motion value with respect to slow walk may be 0. For example, a centering level of a motion value with respect to fast run may be 1. In this case, "a" may be a real number between 0 and 1.

Referring to FIG. 22 again, in operation S504, the OIS MCU 30 may determine a centering level. The centering level may be referred to as a centering step (centeringStep). The centering step may indicate a control angle per 1 step (1 ms). For example, the OIS MCU 30 may determine the centering step as follows.

$$centeringStep = abs(currentPosition - targetPosition)/unusedTime$$

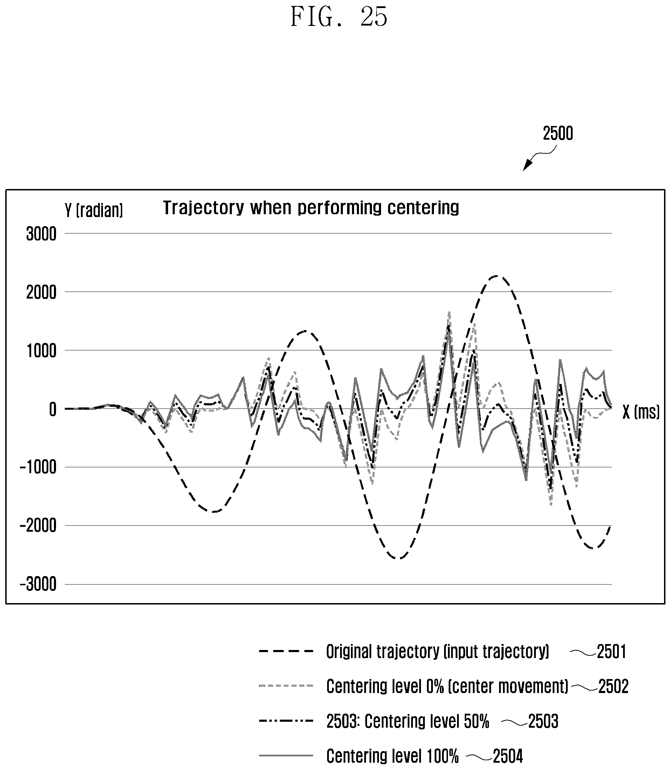

The centering step may not exceed a maximum step (MAX_STEP). The maximum step may indicate a controllable maximum angle per 1 step. For example, the maximum step may be 0.07 degree, preferably 0.05 degrees, more preferable 0.03 degree. In case that the calculated centering step exceeds the maximum step, the centering step may be determined as a preconfigured maximum step. A movement trajectory of the lens 60 according to the AOC movement value MV(AC) to which the target movement control angle (OIS correction value MV(O)) and the centering step are applied may be as shown in FIG. 25.

FIG. 25 is a graph depicting a movement trajectory of a lens 60 according to an AOC movement value MV(AC) to which a centering step is applied and a target movement control angle (OIS correction value MV(O)) of a camera module 180 in an electronic apparatus 101 according to various embodiments.

Referring to FIG. 25, a first graph 2501 depicts an original trajectory of the lens 60 in case that the target movement control angle (the OIS correction value MV(O)) is applied in the camera module 180. A second graph 2502 depicts a trajectory of the lens 60 to which the centering step of 0% is applied in the camera module 180. A third graph 2503 depicts a trajectory of the lens 60 to which the centering step of 50% is applied in the camera module 180. A fourth graph 2504 depicts a trajectory of the lens 60 to which the centering step of 100% is applied in the camera module 180.

When comparing each graph 2502, 2503, and 2504 to which a centering step is applied with the first graph 2501, it can be identified that when the centering level is applied, the trajectory of the lens 60 is controlled more stably. Therefore, when each of the centering level is applied, the movement of the lens 60 may be controlled more efficiently.

[Industrial Applicability]

The disclosure may be applicable to industrial fields related to lens control apparatus.

**Claims**

1. An operation method of a camera module (180), the method comprising:

an operation (S101) of determining whether an unused time exists in which an image sensor (20) is not exposed, based on information about an exposure section of the image sensor (20) connected to a lens (60) for capturing an object;
an operation (S102) of determining a motion value with respect to the camera module (180) based on gyro data generated by a gyro sensor (10) in case of unused time existence;
an operation (S103) of determining a target movement control angle with respect to the lens (60) based on the motion value;

an operation (S104) of determining a movement angle per unit time with respect to the lens (60) based on the target movement control angle; and

an operation (S105) of performing an active optical image stabilization OIS centering control operation AOC with respect to the lens (60) based on the determined movement angle per unit time.

2. The method of claim 1, wherein the movement angle per unit time corresponds to a value acquired by dividing the target movement control angle by at least a portion of the unused time.

3. The method of claim 1 or 2, wherein the motion value comprises a motion level determined based on a sum of maximum values and a sum of minimum values of multiple pieces of gyro data input from the gyro sensor (10) for a predetermined input period.

4. The method of any one of the preceding claims, wherein the motion level comprises real numbers within a specific range corresponding to predetermined multiple motions.

5. The method of any of the preceding claims, wherein the movement angle per unit time is determined based on the motion level.

6. The method of any of the preceding claims, wherein the operation of performing the AOC control operation comprises an operation of determining a weight corresponding to the unused time.

7. The method of claim 6, further comprising an operation of determining, based on the weight, an AOC value to move the lens (60) to a preconfigured center.

8. The method of any one of the preceding claims, wherein the operation of performing the AOC control operation comprises:

an operation of determining, based on the motion value and the target movement control angle, a video digital image stabilization VDIS/electronic image stabilization EIS value; and

an operation of determining, based on the VDIS/EIS value, an AOC value to move the lens (60) to a preconfigured center.

9. The method of any one of the preceding claims, wherein the target movement control angle is determined based on a difference between a time point at which the unused time starts and a time point at which the unused time ends.

10. The method of any one of the preceding claim, wherein the target movement control angle is determined based on the motion level and a difference between a time point at which the unused time starts and a time point at which the unused time ends.

11. An electronic apparatus (101) comprising a camera module (180), the electronic apparatus comprising:

a gyro sensor (10) configured to generate gyro data based on a movement of the camera module (180);

an image sensor (20) connected to a lens (60) configured to capture an object and configured to generate information about an exposure section;

an optical image stabilization OIS controller (30) electrically connected to the gyro sensor (10) and the image sensor (20); and

a processor (40) electrically connected to the OIS controller (30),

wherein the OIS controller (30) is configured to:

determine whether an unused time exists in which the image sensor (20) is not exposed, based on information about the exposure section (S101);

determine a motion value with respect to the camera module (180), based on the gyro data in case of unused time existence (S102);

determine a target movement control angle with respect to the lens (60), based on the motion value (S103);

determine a movement angle per unit time with respect to the lens (60), based on the target movement control angle (S104); and

perform an active optical image stabilization OIS centering AOC control operation with respect to the lens (60) based on the determined movement angle per unit time (S105).

12. The electronic apparatus (101) of claim 11, wherein the processor is configured to determine a motion level, based on a sum of maximum values and a sum of minimum values of multiple pieces of gyro data input from the gyro sensor (10) for a predetermined input, and
wherein the motion value is determined based on the motion level.

13. The electronic apparatus (101) of claim 11 or 12, wherein the OIS controller (30) is configured to determine a weight corresponding to the unused time.

14. The electronic apparatus (101) of claim 13, wherein the OIS controller (30) is configured to determine an AOC value to move the lens (60) to a preconfigured center, based on the weight.

15. The electronic apparatus (101) of any one of the preceding claims 11 to 14, wherein the OIS controller (30) is configured to:

    determine, based on the motion value and the target movement control angle, a video digital image stabilization VDIS/electronic image stabilization EIS value; and
    determine, based on the VDIS/EIS value, an AOC value to move the lens (60) to a preconfigured center.

# FIG. 1

ELECTRONIC DEVICE (101)

- INPUT MODULE (150)
- SOUND OUTPUT MODULE (155)
- BATTERY (189)
- POWER MANAGEMENT MODULE (188)
- DISPLAY MODULE (160)
- MEMORY (130)
  - VOLATILE MEMORY (132)
  - NON-VOLATILE MEMORY (134)
    - INTERNAL MEMORY (136)
    - EXTERNAL MEMORY (138)
- PROCESSOR (120)
  - MAIN PROCESSOR (121)
  - AUXILIARY PROCESSOR (123)
- COMMUNICATION MODULE (190)
  - WIRELESS COMMUNICATION MODULE (192)
  - WIRED COMMUNICATION MODULE (194)
- SUBSCRIBER IDENTIFICATION MODULE (196)
- ANTENNA MODULE (197)
- AUDIO MODULE (170)
- SENSOR MODULE (176)
- INTERFACE (177)
- CONNECTION TERMINAL (178)
- HAPTIC MODULE (179)
- CAMERA MODULE (180)

PROGRAM (140)
- APPLICATION (146)
- MIDDLEWARE (144)
- OPERATING SYSTEM (142)

SECOND NETWORK (199)
ELECTRONIC DEVICE (104)
FIRST NETWORK (198)
ELECTRONIC DEVICE (102)
SERVER (108)

(100)

EP 4 465 649 A1

# FIG. 2

180

10

**Image Sensor**

SOF, EOF

20

gyro

30

angle, gyro

40

**AP**

**Gyro sensor**

**OIS MCU**

**VDIS/ EIS**

angle

50

Exposure Time, Motion

**Lens actuator**

# FIG. 3

START

S101 — Unused time? → NO

YES

S102 — Calculate motion

S103 — Calculate final position of lens

S104 — Calculate movement angle per step

S105 — AOC control

END

FIG. 4

FIG. 5

OIS OFF
(501)

OIS ON
(502)

# FIG. 6

Input Frame #1
(611)

Output Frame #1
(612)

Input Frame #2
(621)

Output Frame #2
(622)

Input Frame #3
(631)

Output Frame #3
(632)

# FIG. 7

MV(G): Gyro Motion, MV(O): OIS correction angle, MV(AC): AOC movement angle, MV(V): VDIS correction angle

Genera flow MV:
Motion Vector

| Gyro Sensor (10) | → MV(G) → | OIS MCU (30) | → MV(G-O) → | AP (VDIS/ EIS) (40) | MV(G-O-V) |

Physical correction
(lens movement)

Image correction

(a)   (b)   (c)

## FIG. 8

```
        START
          |
          | S201
          v
  Calculate unused time  ──────►  unusedTime = fps-exposureTime -readout
          |
          | S202
          v
  Calculate targetPosition ─────►  targetPosition = startPosition-currPosition
          |                         (Final arrival lens position during AOC)
          | S203
          v
  Calculate centeringStep ──────►  centeringStep = abs(currPosition-targetPosition)/unusedTime
          |                         (Amount to be controlled per 1 step)
          v
         END
```

FIG. 9

EP 4 465 649 A1

FIG. 10

EP 4 465 649 A1

FIG. 11

EP 4 465 649 A1

# FIG. 12

```
          START
            │
            │  S301
            ▼
┌─────────────────────────┐      ┌─────────────────────────────────────────────────┐
│ Calculate input motion  │      │ 1. Calculate input gyro accumulated angle min/max for │
│        amount           │      │    predetermined period                          │
└─────────────────────────┘      │ 2. Extract motion level (0-3) for each operation by │
            │  S302              │    thresholding abs (gyro_sum_max-gyro_sum_min) value │
            ▼                    └─────────────────────────────────────────────────┘
┌─────────────────────────┐      ┌─────────────────────────────────────────────────┐
│  Calculate unused time  │      │        unusedTime = fps-exposureTime -readout    │
└─────────────────────────┘      └─────────────────────────────────────────────────┘
            │  S303
            ▼                    ┌─────────────────────────────────────────────────┐
┌─────────────────────────┐      │    targetPosition = (startPosition-currPosition) * │
│ Calculate targetPosition│      │              (motionLevel*100/MAX_LVL)           │
└─────────────────────────┘      │         (Final arrival lens position during AOC: │
            │  S304              │  as motionLevel becomes greater, it becomes closer to 100%, │
            ▼                    │  and motionLevel becomes smaller, it becomes closer to 0%) │
┌─────────────────────────┐      └─────────────────────────────────────────────────┘
│ Calculate Centering Step│      ┌─────────────────────────────────────────────────┐
└─────────────────────────┘      │ centeringStep = abs(currPosition-targetPosition)/unusedTime │
            │                    │              if (centeringStep > MAX_STEP         │
            ▼                    │                centeringStep = MAX_STEP           │
          END                    │            (Amount to be controlled per 1 step)  │
                                 │ MAX_STEP is maximum angle to be controlled per 1 ms and │
                                 │             corresponds to HW spec                │
                                 │            Normally it is 0.05 degrees            │
                                 └─────────────────────────────────────────────────┘
```

FIG. 13

Y (radian)

X (ms)

- - - - Original trajectory (input trajectory) ∽1301

⎯ ⎯ ⎯ ⎯ Step angle 0.01 degrees ∽1302

-··—··· Step angle 0.05 degrees ∽1303

⎯⎯⎯ Step angle 0.03 degrees ∽1304

# FIG. 14

MV(G): Gyro Motion, MV(O): OIS correction angle, MV(AC): AOC movement angle, MV(V): VDIS correction angle

AOC:
Centering effect occurs

```
        10                          30                          40
   ┌──────────┐               ┌──────────┐               ┌──────────┐
   │   Gyro   │    MV(G)      │          │  MV(G-O+AC)   │    AP    │  MV(G-O+AC-V)
   │  Sensor  │ ────────────► │   OIS    │ ────────────► │(VDIS/EIS)│ ─────────────
   │          │               │          │               │          │
   └──────────┘               └──────────┘               └──────────┘
                              Physical correction         Image correction
                              (lens movement)
```

(a)        (b)        (c)

FIG. 15

# FIG. 16

```
        START
          │
          ▼          S401
      ╱Does shutter speed╲    NO
     ╱   exceed t_l?      ╲─────────┐
      ╲                   ╱          │
          │ YES   S402               │
          ▼                          │
   ┌──────────────────────┐          │
   │ Variable attenuator   │          │
   │     processing        │          │
   └──────────────────────┘          │
          │         S403             │
          ▼                          │
 NO   ╱Is shutter speed╲             │
 ┌───╱  less than t_h?  ╲◄───────────┘
 │    ╲                 ╱
 │        │ YES   S404
 │        ▼
 │ ┌──────────────────────┐
 │ │  Lens centering       │
 │ │    processing         │
 │ └──────────────────────┘
 │        │
 │        ▼
 └──────►  END
```

t_l: Attenuator operation lower
shutter speed threshold value
(ex: 1/60s)
t_h: Lens centering operation upper
shutter speed threshold value
(ex: 1/30s)

# FIG. 17

OIS lens

Shield case

Position after tracking
OIS lens according to motion

(a)

60
61

61
60

Slowly moved to center axis by
variable attenuator

(b)

AOC operation

| ss:Less than 1/90s<br>Unused time = 7 | ss:Less than 1/60s<br>Unused time = 4 | ss:Less than 1/30s<br>Unused time = 0 |
|---|---|---|
| 1701 | 1702 | 1703 |

Variable attenuator operation

EP 4 465 649 A1

FIG. 18

1800

**Attenuator LUT : VDIS mode**

EP 4 465 649 A1

FIG. 19

# FIG. 20

2011

2012

2013

[a]

AOC section AOC operation
(2010)

2021

2022

2024

2023

[b]

AOC section AOC operation + variable attenuator operation
(2020)

EP 4 465 649 A1

# FIG. 21

EP 4 465 649 A1

# FIG. 22

START

↓ S501

Calculate input motion amount

↓ S502

Calculate unused time

↓ S503

Calculate targetPosition

↓ S504

Calculate Centering Step

↓

END

---

1. Calculate input gyro accumulated angle
   min/max for predetermined period
2. Extract motion level (0-3) for each operation by
   thresholding abs (gyro_sum_max-gyro_sum_min) value

---

unusedTime = fps-exposureTime -readout

---

targetPosition = (startPosition-currPosition) *
(motionLevel*100/MAX_LVL)

---

centeringStep = abs(currPosition-targetPosition)/unusedTime
if (centeringStep > MAX_STEP*(motionLevel*100/MAX_LVL)
centeringStep = MAX_STEP*(motionLevel*100/MAX_LVL;
(Amount to be controlled per 1 step)
MAX_STEP is maximum angle to be controlled
per 1 ms and corresponds to HW spec
Normally it is 0.05 degrees, but when controlling according
to motion, increase correction to about 0.1 degrees

EP 4 465 649 A1

# FIG. 23

EP 4 465 649 A1

FIG. 24

EP 4 465 649 A1

FIG. 25

2500

Y (radian)    **Trajectory when performing centering**

3000

2000

1000

0                                                                    X (ms)

-1000

-2000

-3000

- - - -   Original trajectory (input trajectory)    ⌇2501

═ ═ ═ ═   Centering level 0% (center movement) ⌇2502

-··-··-   2503: Centering level 50%   ⌇2503

─────   Centering level 100% ⌇2504

## INTERNATIONAL SEARCH REPORT

| International application No. |
| --- |
| **PCT/KR2023/021735** |

**A.     CLASSIFICATION OF SUBJECT MATTER**

**H04N 23/68**(2023.01)i; **H04N 23/55**(2023.01)i; **H04N 23/54**(2023.01)i; **G03B 5/00**(2006.01)i; **G03B 17/12**(2006.01)i

According to International Patent Classification (IPC) or to both national classification and IPC

**B.      FIELDS SEARCHED**

Minimum documentation searched (classification system followed by classification symbols)

    H04N 23/68(2023.01); G02B 7/08(2006.01); G03B 17/14(2006.01); H04N 5/232(2006.01)

Documentation searched other than minimum documentation to the extent that such documents are included in the fields searched

    Korean utility models and applications for utility models: IPC as above
    Japanese utility models and applications for utility models: IPC as above

Electronic data base consulted during the international search (name of data base and, where practicable, search terms used)

    eKOMPASS (KIPO internal) & keywords: 비사용 시간(unused time), 카메라(camera), 모션(motion), 시간(time), 이동 (moving), 각도(angle)

**C.      DOCUMENTS CONSIDERED TO BE RELEVANT**

| Category* | Citation of document, with indication, where appropriate, of the relevant passages | Relevant to claim No. |
| --- | --- | --- |
| A | WO 2023-009406 A1 (DATHOMIR LABORATORIES LLC) 02 February 2023 (2023-02-02)<br>    See paragraphs [0004] and [0034]; and claim 1. | 1-15 |
| A | KR 10-2008-0057345 A (NOKIA CORPORATION) 24 June 2008 (2008-06-24)<br>    See claim 1; and figure 1. | 1-15 |
| A | JP 6543876 B2 (SZ DJI TECHNOLOGY CO., LTD.) 17 July 2019 (2019-07-17)<br>    See paragraphs [0026]-[0042]; and figures 1-2. | 1-15 |
| A | KR 10-2022-0101470 A (SAMSUNG ELECTRONICS CO., LTD.) 19 July 2022 (2022-07-19)<br>    See paragraphs [0051]-[0061]; and figure 3a. | 1-15 |
| A | KR 10-2011-0073262 A (CANON KABUSHIKI KAISHA) 29 June 2011 (2011-06-29)<br>    See claim 1. | 1-15 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 March 2024** | **25 March 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 465 649 A1

International application No.

**PCT/KR2023/021735**

| Patent document cited in search report | | | Publication date (day/month/year) | Patent family member(s) | | | Publication date (day/month/year) |
|---|---|---|---|---|---|---|---|
| WO | 2023-009406 | A1 | 02 February 2023 | None | | | |
| KR | 10-2008-0057345 | A | 24 June 2008 | CN | 101326814 | A | 17 December 2008 |
| | | | | EP | 1949671 | A1 | 30 July 2008 |
| | | | | JP | 2009-516448 | A | 16 April 2009 |
| | | | | JP | 5086270 | B2 | 28 November 2012 |
| | | | | KR | 10-2010-0023056 | A | 03 March 2010 |
| | | | | WO | 2007-057498 | A1 | 24 May 2007 |
| JP | 6543876 | B2 | 17 July 2019 | JP | 2019-109392 | A | 04 July 2019 |
| KR | 10-2022-0101470 | A | 19 July 2022 | CN | 116711294 | A | 05 September 2023 |
| | | | | EP | 4191997 | A1 | 07 June 2023 |
| | | | | US | 2023-0209202 | A1 | 29 June 2023 |
| | | | | WO | 2022-149654 | A1 | 14 July 2022 |
| KR | 10-2011-0073262 | A | 29 June 2011 | CN | 102104733 | A | 22 June 2011 |
| | | | | CN | 102104733 | B | 23 October 2013 |
| | | | | EP | 2357792 | A1 | 17 August 2011 |
| | | | | EP | 2357792 | B1 | 25 February 2015 |
| | | | | JP | 2011-150295 | A | 04 August 2011 |
| | | | | JP | 5721404 | B2 | 20 May 2015 |
| | | | | KR | 10-1319907 | B1 | 29 October 2013 |
| | | | | US | 2011-0149141 | A1 | 23 June 2011 |
| | | | | US | 2013-0201387 | A1 | 08 August 2013 |
| | | | | US | 8564713 | B2 | 22 October 2013 |
| | | | | US | 8687108 | B2 | 01 April 2014 |

Form PCT/ISA/210 (patent family annex) (July 2022)